Europäisches Patentamt

European Patent Office

Office européen des brevets

(11) Publication number: **0 596 205 A2**

# EUROPEAN PATENT APPLICATION

(21) Application number: **93112825.0**

(22) Date of filing: **10.08.93**

(51) Int. Cl.⁵: **G01N 35/00**, G06F 15/20, G05B 19/417

(30) Priority: **03.11.92 US 971142**

(43) Date of publication of application:
**11.05.94 Bulletin 94/19**

(84) Designated Contracting States:
**DE GB IT**

(71) Applicant: **Hewlett-Packard Company**
**3000 Hanover Street**
**Palo Alto, California 94304(US)**

(72) Inventor: **Bullaughey, Wayne**
**1802 Lenni Drive**
**West Chester, PA 19382(US)**
Inventor: **Engel, Steven J.**
**1600 Cheryl Lane**
**Kennett Square, PA 19348(US)**
Inventor: **Jupiter, Shirley**
**3 Doe Run Ct, Apt. 3C**
**Wilmington, DE 19808(US)**
Inventor: **Snipes, Harriet P.**
**3421 Pebble Beach Dr.**
**Wilmington, DE 19808(US)**
Inventor: **Wurm, Christopher M.**
**2 Oueen Lane**
**Landenberg, PA 19350(US)**
Inventor: **Hawk, David R.**
**RD 2, Box 1B**
**Landenberg, PA 19350(US)**

(74) Representative: **Schoppe, Fritz, Dipl.-Ing.**
**Patentanwalt**
**Georg-Kalb-Strasse 9**
**D-82049 Pullach (DE)**

(54) Bench supervisor system.

㊷ An analytical system comprises a Bench Supervisor system, which is responsible for coordinating the operations of various hardware instruments in carrying out a bench method or a bench sequence. The Bench Supervisor system communicates with a number of instrument applications (i.e., programs), which applications directly interface with and control the operations of the instruments composing the bench hardware. The bench hardware comprises a number of instruments as well as a transport instrument. In general, the bench hardware comprises a variety of instruments which may be categorized as preparation instruments, analytical instruments, or transport instruments. The Bench Supervisor comprises a Host Services module; a Resource Entry module; a Bench Method Commands module; a Sequence Commands module; a Configuration module; a Sequence Scheduler module; a Resource Allocation module; a Communications module; a Data Base Management module; a Data Base Access Module; and a CP module.

**FIELD OF THE INVENTION**

The present invention generally relates to analytical chemistry, and more particularly relates to analytical systems for carrying out bench methods. Still more particularly, the present invention relates to a system (architectural specification and software program), referred to herein as a *Bench Supervisor system*, for coordinating the operations of a number of instruments in performing a bench method or bench sequence.

**BACKGROUND OF THE INVENTION**

In the field of analytical chemistry, a bench method is a complete specification of how to run one or more instrument methods to completely prepare and analyze a single sample. The specification includes information regarding how a sample is moved from its starting location to each of a variety of instruments that perform some kind of preparation or analysis on the sample. Typically, the individual instruments are controlled by corresponding instrument application programs and have their own programming languages. In typical systems, there is nothing which ties the individual instruments together and supervises their operation, nor is there means available for automatically transporting a sample between instruments. In cases where individual instruments do communicate directly with one another, each instrument must communicate in a format which the other instrument expects, and vice versa. This is a problem in that it requires the operator to have detailed knowledge of the programming and communications format of each instrument in the system. Moreover, in cases where a new instrument is to be added to an existing system, the new instrument must be upgraded to be compatible with the existing instruments, and vice versa. This too requires that the operator have detailed knowledge of the individual instruments involved. In addition, specific software must be written for each instrument-to-instrument interface.

Accordingly, a primary goal of the present invention is to provide a system whereby bench methods and bench sequences (defined below) may be carried out by a variety of instruments that communicate directly with a supervisory system (a bench supervisor system), the supervisory system orchestrating the overall system such that the bench method/sequence is automatically performed. A further goal of the present invention is to provide a system that can be implemented without detailed knowledge of the way in which the individual instruments operate. In this regard, it should be noted that U.S. Patent No. 4,727,494, February 23, 1988, titled "Computerized Robot Control System With Scheduling Feature," discloses a system having a scheduling feature; however, this system memorizes the detailed commands for each instrument under its control, and the operator still has to be familiar with the details of how each instrument operates. Accordingly, a further goal of the present invention is to provide a system that is not required to memorize specific commands dictated by the programming requirements of each instrument application, but rather employs a standard communication protocol by which the respective instruments communicate with a bench supervisor system. In this regard, the goal is for the bench supervisor system to coordinate the operations of the respective instruments without detailed knowledge of either the step by step procedures performed by the instruments or the manner in which the instruments are programmed.

**SUMMARY OF THE INVENTION**

One aspect of the present invention provides for an analytical system comprising a number (one or more) of individual programs, wherein one or more of the programs control an instrument; a supervisor program, wherein the supervisor program coordinates the activities of the instruments; and means for switching between the supervisor program and individual programs controlling the instruments. It should be noted that the invention is not limited to systems having more than one instrument, since the supervisor program may be employed to control a single instrument. Moreover, an "instrument" in the system could in fact be a software object, unconnected to any hardware.

In one embodiment, the instruments include means for processing a sample, and the system further comprises means for transporting the sample between at least two of the instruments. In addition, the instruments may require one or more resources to process the sample, and the system may comprise means for controlling and allocating the resources. The system may also advantageously include means for employing other programs to produce output data, and means for making decisions relative to the processing of the sample. The latter decision-making means enables the system to modify a bench method or sequence by redirecting a sample or changing an analysis as a function of an intermediate result. The decisions may relate, e.g., to scheduling operations or processing steps of instruments in the system. In addition, according to the scheduling decisions, more than one instrument may be active simultaneously

EP 0 596 205 A2

and/or the individual instruments may have more than one sample in process at a given time.

Further, the system design may be hierarchical, and at least one of the instruments may comprise a second system including a second instance of a bench supervisor. Moreover, at least one of the instruments may be "shared" in the sense that it is controlled by one individual program at one time and by another individual program at another time. In a preferred embodiment, the programs communicate through dynamic data exchange (DDE). The system may also include means for recording a log indicating operations performed on a sample and making the log available to an operator for later confirmation of sample history.

The present invention also provides a bench supervisor system for coordinating the operations of a number of instruments in performing a bench method in connection with a sample to be analyzed or a bench sequence in connection with a set of bench methods and samples to be analyzed. One embodiment of a bench supervisor system in accordance with the present invention comprises: configuration means for ascertaining capabilities of selected instruments; bench method command means for ascertaining the instrument methods performed by the selected instruments and input/output lists and implicit steps associated with the selected instruments; sequence command means comprising means for preparing for a bench sequence, including ascertaining a name for the bench sequence, and for identifying a bench method(s) associated with the bench sequence; sequence scheduler means for scheduling instrument methods for each instrument required by the bench sequence; data base management means for managing bench methods; and communications means for communicating with instrument applications.

In one preferred embodiment of the invention, the sequence command means further comprises means for (1) ascertaining a vial range associated with the bench sequence, collecting bench method inputs resolved to sequence and per sample, and ascertaining additional required inputs; (2) starting the bench sequence, including acquiring instruments required for the bench sequence, allowing the user to verify all inputs are correctly set before the sequence is run, and scheduling the sequence; (3) pausing and rescheduling a sequence in progress; and (4) aborting a sequence.

In another embodiment, the sequence scheduler means comprises means for: (1) selecting instrument methods for each instrument; (2) waiting for required inputs to be ready and required outputs to be enabled; (3) requesting each instrument to load a corresponding instrument method; (4) initializing input and output state machines associated with each instrument; (5) requesting each instrument to start performing its corresponding instrument method; (6) effecting input and output state transitions as each instrument indicates a state change; and (7) releasing an instrument when the instrument indicates that its method has completed.

In another embodiment of the invention, the data base management means comprises means for: (1) creating new bench methods, creating new versions of existing bench methods, copying existing bench methods, providing a list of existing bench methods, providing a list of inputs, outputs and implicit steps for existing bench methods, resolving instrument method inputs and outputs, and providing a list of resources used by existing bench methods; (2) managing bench sequences, including creating new bench sequences, creating new versions of existing bench sequences, copying existing bench sequences, providing a list of existing bench sequences, entering bench methods for a bench sequence, building a list of inputs resolved to a sequence and per sample for a sequence, providing a list of bench methods for a sequence, providing a list of inputs resolved to a sequence and per sample for a sequence, and storing input values for bench sequences; and (3) writing modified bench methods and sequences to disk files.

Yet another embodiment of the invention further comprises: (g) host services means for providing information to a host, the information including information regarding the capabilities of the bench supervisor, bench methods the bench supervisor can schedule, inputs and outputs of a particular bench method, the status of a sample being processed, and data outputs for a particular sample.

In yet another embodiment, the bench method command means further comprises means for performing default resolution and user directed resolution for the instrument steps of the selected instrument methods.

In still another embodiment, the number of instruments includes at least one preparation instrument and at least one analytical instrument.

The present invention also encompasses analytical systems comprising a preparation instrument comprising a preparation instrument application and preparation instrument hardware; an analytical instrument comprising an analytical instrument application and analytical instrument hardware; and a bench supervisor for coordinating the operations of the preparation instrument, analytical instrument, and transport device. According to the invention, the instruments comprise common interface features and the bench supervisor includes communications means for communicating with the instruments in accordance with a prescribed protocol, without requiring specific knowledge about each instrument.

3

In one preferred embodiment of an analytical system in accordance with the present invention, at least one of the instruments includes a translator that translates an interface without the common interface features into an interface with the common interface features.

In addition, the bench supervisor may advantageously further comprise means for automatically requesting prescribed types of information from the instruments, the information including instrument methods available from the instruments, resource requirements of the available instrument methods, and input/output requirements of the available instrument methods; means for creating a default map defining how outputs from one instrument step are connected to inputs of another instrument step; means for overlapping a number of bench methods and instrument steps to simultaneously process two or more samples; and means for representing resources as physical entities which must be allocated for use by the instruments, whereby the quantity of a particular resource can be continually monitored until the particular resource is completely consumed.

Thus, according to the present invention, a Bench Supervisor software program integrates a number of analytical instruments and their methods such that samples can be processed through a bench method (a series of instrument steps or operations) efficiently to produce the desired results.

As indicated above, an important aspect of the present invention is the concept of *virtual instruments.* By building instruments with common characteristics or interface features (a virtual instrument), the Bench Supervisor system can communicate with these instruments without the need to include specific knowledge about each instrument. For existing instruments without such common characteristics, a translator can be built which will translate the interface into something which the Bench Supervisor system expects.

At certain points during execution, the Bench Supervisor system automatically requests specific types of information, including: names and capabilities of the instruments which the system supports, available methods from an instrument, method names and types of information requested, resource requirements (estimate of system resources a specific instrument method will use while running), input/output requirements (the physical material and data which are both used and produced by an instrument method), and optionally the estimated length of run for the instrument method.

Input/output mapping is another important concept of the present invention. The bench method includes a description of how outputs from one instrument step are connected to inputs of another instrument step. The Bench Supervisor system provides a default map which can be modified by the user.

Overlapping is still another important aspect of the invention. Overlapping is related to input/output mapping because it is based upon scheduling via inputs and outputs. The Bench Supervisor system can overlap a number of bench methods and instrument steps where two or more samples are being processed simultaneously in different parts of a system. The power to overlap operations of different instruments is obtained by not requiring all inputs to be present at the beginning of an instrument step. If an instrument generates more than one sample output (at different times during a process), the outputs are passed on to the next instrument step immediately without waiting for the instrument to finish.

Resource Allocation is yet another important aspect of the invention. The Bench Supervisor system can represent physical entities as resources which must be allocated for use by the instruments. Such resources may include, e.g., empty vials, SPE cartridges, solvent reservoirs and empty tray locations. The quantity of a resource can be continually monitored until it is completely consumed. Moreover, if it is determined that there is not enough of a particular resource to complete a bench method or sequence, the operator, after being so advised, may choose not to start the bench method/sequence.

Another important element of the invention is referred to herein as *JCON* (a type of icon). Upon initialization, the Bench Supervisor system hides the installed (or conFigured) instrument applications on the display in order to avoid confusion. To show the hierarchical relationship between the Bench Supervisor system and the instruments, a small window on the display will include icons for the Bench Supervisor system and available instruments, where such instrument icons are attached below the Bench Supervisor icon via lines. The appearance is of one integrated system which makes it easier for a user to switch between applications. The operator can switch to the desired window by clicking on the corresponding icon.

The present invention also encompasses methods for communicating information between a bench supervisor program and an instrument application. According to the invention, such methods include communicating in accordance with a prescribed protocol, wherein the prescribed protocol defines a standard interface protocol by which the bench supervisor sends information to and receives information from the instruments. The information includes: (a) information requests, whereby the bench supervisor makes requests of an instrument application for specific types of information; (b) action requests, comprising commands from the bench supervisor to an instrument application to perform some action; (c) status information, whereby the bench supervisor requests information regarding state changes in an instrument and signals the instrument of state changes in the bench supervisor; (d) data value transfers, whereby the values of data type parameters and dynamic locations are passed between the bench supervisor and instrument applications; (e) user interface requests, whereby a dialog is provided for requesting some type of user interaction; and (f) error handling, whereby a return message is used to display messages to the user about the status of the application.

In one preferred embodiment, the information requests include: (1) application information, whereby the bench supervisor requests information about the instrument when the application is first started up and the bench supervisor informs the instrument of a version number of the bench supervisor, which allows the instrument to adapt its behavior to a particular version of the bench supervisor; (2) available methods, whereby the bench supervisor requests a list of valid methods from an instrument for a specific class; (3) method information, whereby the bench supervisor specifies a method name and the type of information requested; and (4) allowed transport, whereby the bench supervisor determines if a device which has indicated that it can perform general transports can perform a specific transport.

In addition, in this embodiment, in response to an application information request from the bench supervisor, the application returns the following information items: (i) the application tells the bench supervisor what level of bench supervisor the instrument was designed to support; (ii) the application tells the bench supervisor the name and capabilities of the instruments which the application supports; and (iii) the application informs the bench supervisor of the names of the required resource types.

Further, in response to a method information request from the bench supervisor, the application responds with the following response depending on which information type was requested: (i) method data/time stamp, wherein the method time stamp represents the time the method was last modified; (ii) resource requirements, the resource requirements representing an estimate of system resources which the running of a specific instrument method will use; (iii) input/output parameter information, which the bench supervisor employs to prepare a bench method, wherein the application sets the following topic/item values: method mode, wherein the method mode indicates how the instrument step is scheduled; implicit method steps, wherein the implicit method steps indicate additional implicit instrument steps which should be automatically added to the method; and an input/output list, which defines the type of inputs and outputs a particular instrument method requires.

Still further, in this embodiment the action request commands include: (1) acquire/release instrument, which command tells the instrument that its instrument control functions should be reserved for control by the bench supervisor or released; (2) reset, which command is sent once before the beginning of a sequence and allows the application to perform any required initialization operations before running one or more methods; (3) load method, which command requests a virtual instrument to prepare the instrument to begin an instrument step; (4) start instrument step, which command requests the virtual instrument to start an instrument step; (5) abort instrument step; (6) pause instrument step; (7) continue instrument step; and (8) close application, which commands the application to shut down.

The status information may advantageously include: (1) input/output parameter status, whereby parameter status information is passed to and from the instrument during an instrument step; (2) instrument status, the instrument status representing the current status of an instance of the application; (3) step status, the step status representing the status of the current instrument step if a step is currently active or of the last instrument step if the instrument is between steps; (4) acquire status, the acquire status indicating whether the instrument is in an acquired state or released state.

The data value transfer requests may include: (1) get output value, the get output value request providing a way for the bench supervisor to transfer data type and dynamic location outputs from the instrument to the bench supervisor; and (2) send input value, the send input value request providing a way for the bench supervisor to transfer data type inputs to the instrument from the bench supervisor.

Other features of the present invention are described below.

## BRIEF DESCRIPTION OF THE DRAWINGS

Figure 1 is a schematic representation of an analytical system in accordance with the present invention.

Figure 2 is a block diagram of one embodiment of a Bench Supervisor program in accordance with the present invention; this Figure also depicts the relationship between a host computer, a user, a number of instruments, and the Bench Supervisor program.

Figure 3 is a flow chart of a Configuration Startup program block.

Figure 4 is a flow chart of a Bench Method Preparation program block.

Figure 5 is a flow chart of a Sequence Preparation program block.

Figure 6 is a flow chart of a Start Sequence program block.

Figure 7 is a schematic representation of a Sequence state machine.

Figure 8 is a schematic representation of a Bench Method state machine.

Figure 9 is a schematic representation of an Instrument Step state machine.

Figure 10 is a schematic representation of an Data Input Parameter state machine.

Figure 11 is a schematic representation of a Transported Physical Input state machine.

Figure 12 is a schematic representation of a Transport Physical Input state machine.

Figure 13 is a schematic representation of a Data Output state machine.

Figure 14 is a schematic representation of a Transport Physical Output state machine.

Figure 15 is a schematic representation of a Transported Physical Output state machine.

Figures 16-31B depict exemplary screen displays generated by one embodiment of the present invention; these Figures are referred to in describing the Bench Supervisor's behavior as it would appear from a user's perspective.

## DETAILED DESCRIPTION OF PREFERRED EMBODIMENTS

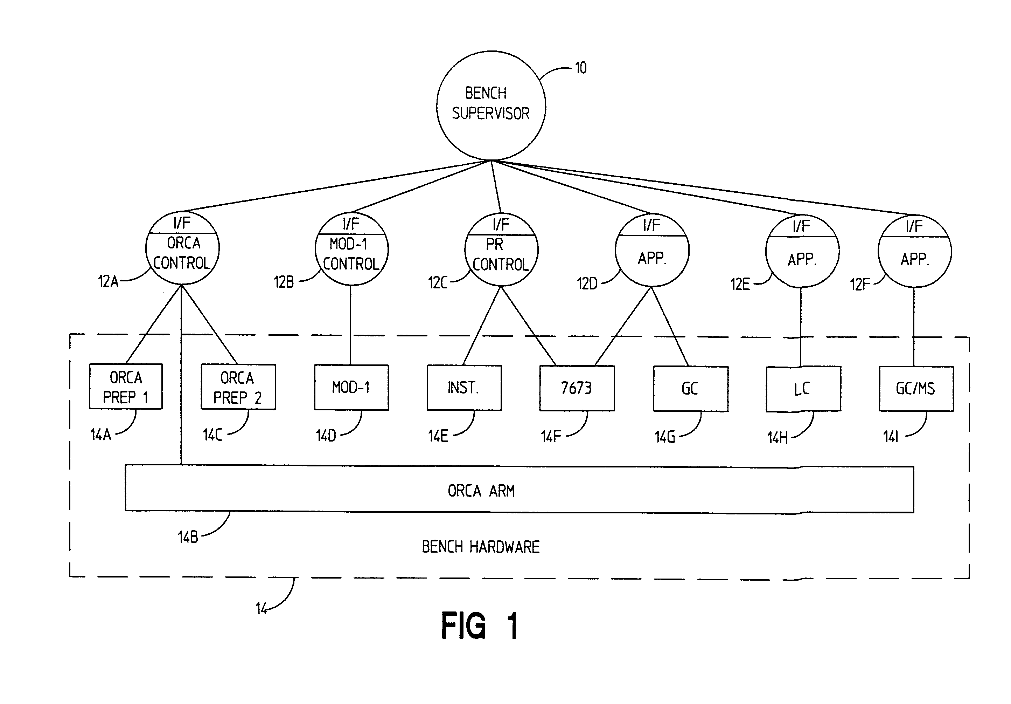

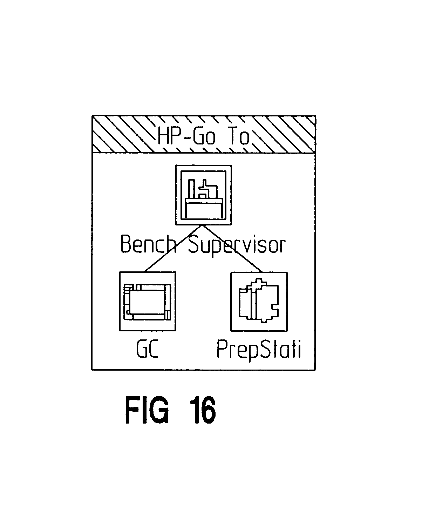

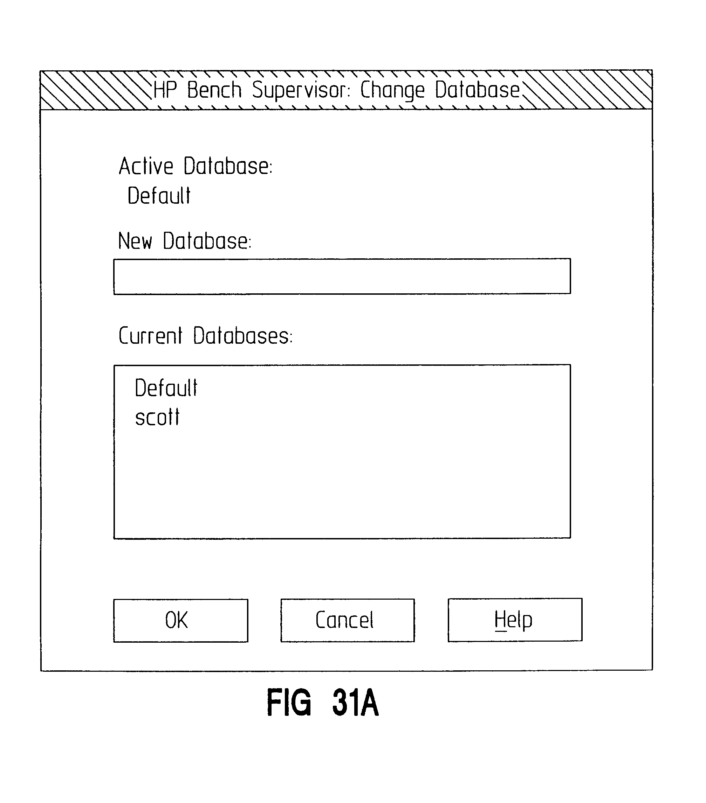

Preferred embodiments of the present invention are described below from both an implementor's perspective (e.g., a programmer's or engineer's perspective) and a user's perspective. The former description refers to the schematic diagrams and flow charts depicted in Figures 1-15, and the latter description refers to the screen displays depicted in Figures 16-31B; a detailed description of an applications interface protocol in accordance with the present invention is provided in an appendix to this specification (before the claims). However, a listing of important terms used in this specification along with brief descriptions of their meanings will be provided first.

**Bench** comprises the Bench Supervisor application software and the application software for each instrument to be used on the bench.

**Bench Method** is the complete specification of how to run one or more instrument methods to completely prepare and analyze a single sample. This includes how to move a sample from its starting location to each instrument which may do something to it and back to its final location. If a sample is split or derived to into related samples, all of the operations on the related samples are included. The original sample may be contained in more than one physical container.

**Calibration Method** is a bench method that specifies how to calibrate another bench method. When a bench method specifies a calibration method, it also specifies a rule which controls when the calibration method is run. The rules allow specifying that the calibration method is run before a specified number of runs of the bench method. A calibration method can also be specified as a bracket calibration in which case it is run before and after the specified number of normal bench method runs with final calculations for the samples being postponed until the final calibration occurs.

**Capability List** lists the optional capabilities of a particular instrument and its instrument application. During startup the Bench Supervisor requests a capabilities list from each conFigured instrument application. The capabilities list is used to determine what types or requests can be made of an instrument application.

**CP** is an interpreter for a BASIC-like language which is tailored for the analytical chemistry application area. Programs written in the CP language can be associated with Bench Methods to extend the functional capabilities of the Bench Supervisor system.

**Data base** contains all information used by the Bench Supervisor system to control activities on the bench. It includes bench methods, sequences and resources. The data base is divided into multiple contexts. One context is active at a time. A context contains bench methods and sequences. Contexts let different users have independent collections of bench methods and sequences. Contexts may also be used for different sample groupings.

**Host** is a separate application program typically running in a separate computer which can interact with the Bench Supervisor system. It may be a laboratory-wide information manager or another Bench Supervisor running in a hierarchical relationship to another Bench Supervisor. The relationship between the Bench Supervisor system and a Host is similar to that between the Bench Supervisor system and an instrument application.

**Implicit Steps:** One instrument method can specify additional instruments and the methods that need to be performed in order to accomplish the original instrument's method. For example, a preparation instrument may use a mix instrument to mix a sample at various stages in the preparation method. The preparation instrument method can specify the mix steps as implicit steps which eliminates the need for the user to explicitly add mix instrument steps to the Bench Method.

**Inout** is the specification of a piece of data or a physical entity which is both an input and an output for a particular instrument method. All physical entities are inouts.

6

**Input** is the specification of a piece of data or a physical entity which is required by an instrument application in order to complete a particular instrument method.

**Input Ready** is a status of an input which indicates the data value or physical entity is ready for delivery to the application for which the input is required.

**Input/Output List** is the list of inputs and outputs required for a particular instrument method.

**Instrument Application** is the software which controls the operation of a hardware instrument. It will normally include a user interface for entering information used to control the hardware instrument as well as the necessary communications and control software to actually control the device.

**Output** is the specification of a piece of data or a physical entity which is generated by an instrument application when it performs a particular instrument method.

**Output Enabled** is a status of an output which indicates the application is ready to send the data value or release the physical entity specified by the output.

**Per sample** is a type of resolution which indicates a unique input value is required for each sample in the sequence.

**Primary Inout** is a physical inout which has its input resolved to be entered once per sample and is marked as the primary. This causes a sequence samples queue table editor to display two fields for the inout for each bench method which includes it in the sequence. The two fields allow a range of locations to be entered indicating that all samples in the locations in the range are to be run on the associated bench method.

**Resolution** is the process of determining the source for an input to an instrument step. The input may come from the output of another instrument step, an original sample placed in a particular location, a resource that can be allocated as needed, or the specification as to when a data item is to be entered. Data items can be entered as part of a Bench Method, as part of a Sequence, or when needed.

**Resource:** Physical input to instrument methods can be resolved to resources. Resources represent physical material which will be used in processing a sample but which is not specifically related to the sample. For example, a solvent can be allocated as a resource. Each time an amount of a resource is allocated, equivalent material is provided. Resources can also be used for outputs, for example, empty locations in a vial tray are specified as an empty location resource.

**Sample** is the material to be processed and/or analyzed. A sample may be contained in more than one container. The sample does not include material that may be used in the processing of the sample but which is not specific to the sample. For example if a solvent is added to the sample the solvent before being added is not considered part of the sample

**Sequence** is a list of Bench Methods to be performed on a set of samples. It includes the physical location of the specified samples. It also may include data values which are required as inputs for the Bench Methods listed.

**State machine** defines a set of rules for how the states of inputs and outputs can change based on responses from instrument applications.

**Transport** is the physical movement of an input or output. An instrument with transport capability is required to do the transport. Optionally, the operator can be requested to perform a transport for which no instrument is available.

**Transport Device** is an instrument which has the ability to move physical samples to other instruments included in the bench. A transport device indicates its ability to do transports in the capability list returned to the bench supervisor during configuration. A transport device must be able to respond to requests sent by the bench supervisor during a bench method preparation that the bench supervisor uses to determine which transport device to use for a particular transport.


**A. Description of System From Programmer's Perspective**


Figure 1 schematically depicts one embodiment of an analytical system in accordance with the present invention. In this Figure, the circles represent software elements and the rectangular boxes represent hardware elements. The analytical system comprises a Bench Supervisor 10, which is responsible for coordinating the operations of the various hardware instruments in carrying out a bench method or a bench sequence. The Bench Supervisor 10 communicates with a number of instrument applications (i.e., programs) 12A, 12B, 12C . . . 12F, which applications directly interface with and control the operations of the instruments composing the bench hardware 14. The bench hardware 14 comprises a number of instruments 14A, 14C . . . 14I as well as a transport instruments 14B and 14F. For example, the transport instrument 14B may be a robot arm. In general, the bench hardware 14 comprises a variety of instruments which may be categorized as preparation instruments, analytical instruments, or transport instruments. The terms "preparation instrument", "analytical instrument" and "transport instrument" are generic terms which refer to general types of instruments in the field of analytical chemistry. Preparation instruments perform some transformation such as combining, mixing and heating. Analytical instruments perform some type of quantitative or qualitative measurement of a physical substance. In addition, some of the names given to the various instruments (Orca, MOD-1, 7673, GC (gas chromatograph), LC (liquid chromatograph), GC/MS and the names given to the various applications (Orca Control, MOD-1 Control, etc.) are known to those skilled in the art of analytical chemistry. However, knowledge of the particular instruments and applications employed in the exemplary system of Figure 1 is unnecessary in achieving an understanding of the present invention. Therefore, the instruments and applications are not described in detail herein.

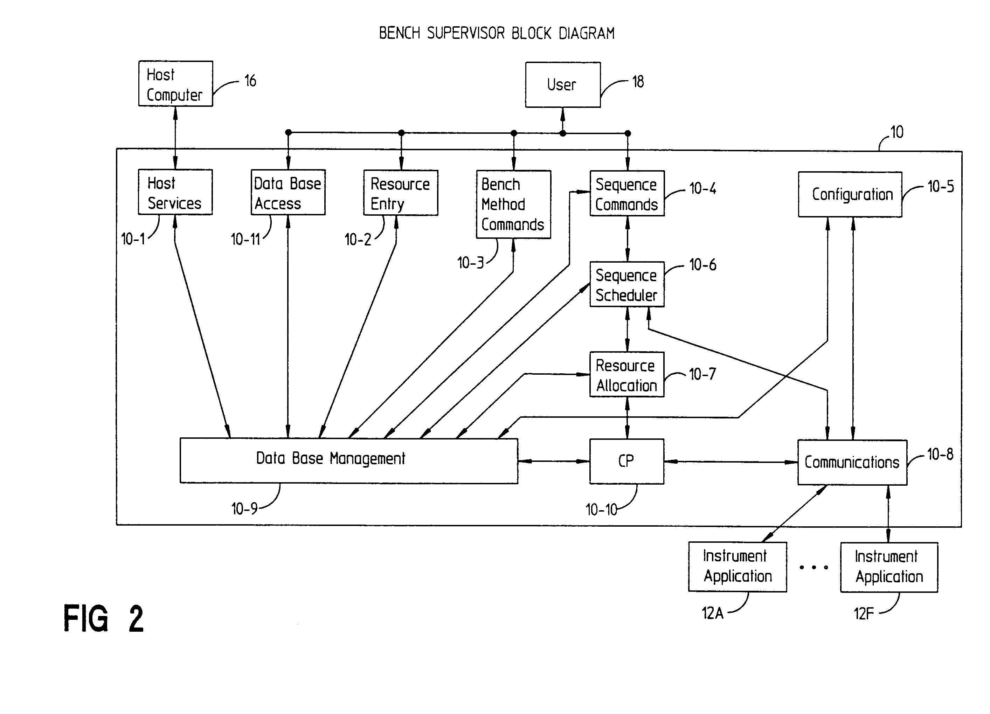

Figure 2 is a block diagram in which the Bench Supervisor system 10 is shown in greater detail. As shown, the Bench Supervisor system 10 communicates with a host 16, a user 18, and a plurality of instrument applications 12A-12F. It should be noted that the Bench Supervisor system 10 may be composed of a number of functional modules (blocks), as depicted in Figure 2, or may be a single, undivided program. However, to aid the reader's understanding of the Bench Supervisor system 10, it will be explained as though it were composed of discrete modules 10-1, 10-2, 10-3, etc.

In the embodiment of the invention depicted in Figure 2, the Bench Supervisor system 10 comprises a Host Services module 10-1; a Resource Entry module 10-2; a Bench Method Commands module 10-3; a Sequence Commands module 10-4; a Configuration module 10-5; a Sequence Scheduler module 10-6; a Resource Allocation module 10-7; a Communications module 10-8; a Data Base Management module 10-9; a CP module 10-10; and a Data Base access module.

Briefly, the functions performed by the respective modules are:

I. Host Services Module 10-1

Implements host services protocol.

A. Capabilities

Informs host of capabilities provided by the Bench Supervisor system.

B. Methods

Provides list of Bench Methods the Bench Supervisor system has available to run.

C. Method information

Provides input and output information for a particular bench method.

D. Log Sample

Receives sample information from the host.

E. Advise Services

Provides dynamic status reporting of sample processing status.

F. Sample Data

Allows host to retrieve data outputs for sample.

II. Resource Entry Module 10-2

When a sequence is selected for running, the total number of resources are determined by the Bench Supervisor system. The user is asked to specify where each resource entity is located.

III. Bench Method Commands Module 10-3

A. Bench Method Preparation

1. User enters name for new bench method or selects existing bench method for modification.

2. User selects instruments used in bench method.

3. List of available Instrument Methods are requested from selected instruments.

4. Input/Output Lists and Implicit Steps are requested from instruments for selected instrument methods.

5. Default resolution is performed by the Bench Supervisor.

6. User directed resolution is performed.

7. User enters data values for parameters resolved to the bench method.

B. Start Bench Method

This command provides a way to run a single bench method without creating a sequence. The logic of the command is equivalent to creating a sequence with a single bench method and single sample and running it.

C. Abort Bench Method

Equivalent to aborting a sequence.

D. Delete Bench Method

Deletion of a bench method makes it inaccessible via its name. It can still be used if it was included in a sequence or calibration method in another bench method.

IV. Sequence Commands Module 10-4

A. Sequence Preparation

1. User enters name for new sequence or selects existing sequence for modification.

2. User selects Bench Method.

3. User enters primary location range and repetition (number of times the bench method will be run on a single sample).

4. Repeat steps 2B and 3C for additional Bench Methods.

5. User enters required inputs.

B. Start Sequence

1. Acquire Instruments Insures that instruments are not being used in stand alone mode while sequence is running.

2. Verify Inputs Lets user verify all inputs are correctly set before sequence is run. Transport device layout can be used to graphically display where physical inputs are located.

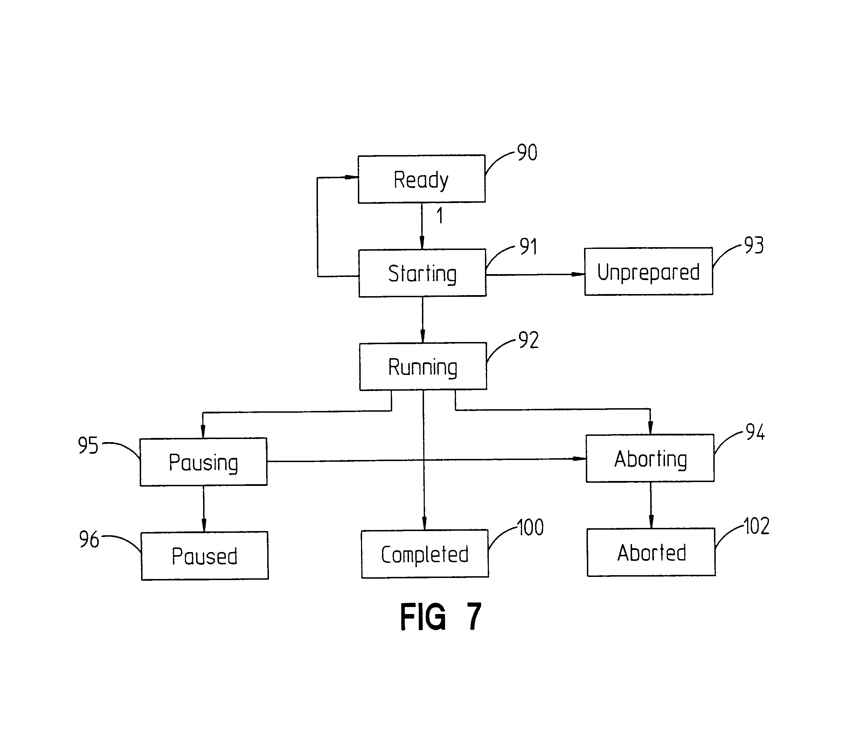

3. Schedule Sequence Sets up sequence scheduler to run the sequence. The Sequence state machine specifies how scheduling of the sequences works. The Bench Method state machine specifies how bench methods are scheduled to run on individual samples in the sequence. The Instrument Step state machine defines how individual instrument methods are scheduled within a bench method. The input and output state machines define how input and output parameters are scheduled for delivery to and from instrument applications. (The above-referenced state machines are described below with reference to Figs. 7-15.)

C. Pause Sequence

Orders suspension of processing that can be resumed at a later time. Sets the Sequence state machine status to Pausing.

D. Abort Sequence

Aborts the currently running sequence regardless of current state of instrument applications. Instruments are responsible for insuring that an abort does not jeopardize the hardware instrument. An aborted sequence cannot be restarted from the point at which it was aborted. The Sequence state machine status is set to Aborting.

E. Delete Sequence

Removes a sequence from the data base.

V. Configuration Module 10-5

A. Startup

1. Configuration uses list of instrument applications to be conFigured for the bench.

2. Each application is started.

3. Program-to-program communications are established between the Bench Supervisor system and the instrument application(s).

4. Version information is exchanged to insure compatibility.

5. Capability lists are requested from the applications. The instrument application's capabilities are used by the Bench Supervisor system to restrict the types of requests made to the instrument. For example, some instruments have transport capabilities, others do not. When the Bench Supervisor system needs to create a transport step in a bench method, only instruments with transport capability will be polled to see if they can perform the required transport.

B. Shut down

The Bench Supervisor system checks to make sure none of the instrument applications are busy performing an operation which would be interfered with by shutting down. A shut down command is sent to each instrument application. All modified parts of the data base are saved.

VI. Sequence Scheduler Module 10-6

A. Sequence state machine

Defines the status transitions for a sequence being run.

B. Bench Method state machine

Defines the status transitions for each bench method being run on a sample as part of a sequence.

C. Instrument Step state machine

Defines the status transitions for the instrument steps in a bench method.

D. Data Input state machine

Defines the status transitions for data inputs to an instrument step.

E. Input Transported Physical Input state machine

Defines the status transitions for physical inputs to an instrument step which need to be transported

EP 0 596 205 A2

by a transport device.

F. Transport Physical Input state machine

Defines the status transitions for physical inputs to a transport device.

G. Data Output state machine

Defines the status transitions for data outputs from an instrument step.

H. Transported Physical Output state machine

Defines the status transitions for physical outputs from an instrument step which need to be transported by a transport device.

I. Transport Physical Output state machine

Defines the status transitions for physical outputs from a transport device.

VII. Resource Allocation 10-7

A. Resource Definition

Enters a definition in the data base. A resource definition consists of the name of the resource, the type of location where instances of it will be allocated and the allocation strategy used for it. The available allocation strategies are:

1. **Consumable** - a resource for which entities can be used a finite number of times. The resource definition also includes the number of times an instance can be used. Consumable resources might be used to allocate vials of a solvent which contain enough solvent to prepare more than one sample.

2. **Unit** - a resource for which an entity can only be used once. A unit resource might be used to allocate a filter cartridge which is contaminated after it is used to filter a sample once.

3. **Empty Location** - is a resource used to allocate empty locations in a tray or other device which can be used to hold physical material.

Resource definitions specify whether the resource is a source or destination. Source resources can be resolved to inputs while destination resources can be resolved to outputs.

B. Resource Instance Entry

Resource instance entry adds instances of a particular resource type to the data base. Each resource instance has a particular physical location specified.

C. Resource Instance Allocation

Resource instance allocations request the next available instance of a particular resource type. If the resource is consumable and a partially allocated instance is available then that instance is allocated. Once a consumable resource instance is allocated it cannot be allocated again until it has been returned.

D. Resource Instance Return

Consumable resource instances are returned to the available list of instances until their amount has been used up. Each time a consumable resource instance is allocated the available amount for it is decremented by the amount specified to be used by the input it is resolved to. When a resource instance available amount is zero or less then the required minimum amount it is not put back in the available list when it is returned.

VIII. Communications 10-8

Provides communications services for other Bench Supervisor functions. Insures that an application is ready to perform a request from Bench Supervisor before a request is made.

IX. Data Base Management Module 10-9

The data base management functions are not directly accessible by the user. They provide support services for other parts of the Bench Supervisor system.

A. Manage bench methods.

1. Create new bench method.

2. Create new version of Existing bench method.

3. Copy bench method.

4. Provide list of existing bench methods.

5. Provide list of inputs, outputs and implicit steps for bench method.

6. Resolve instrument method input and outputs.

1. Create transport steps for physical inputs and outputs.

7. Provide list of resources used by bench method.

B. Manage bench sequences

1. Create new sequence.

2. Create new version of existing sequence.

3. Copy sequence.

10

4. Provide list of existing sequences.

5. Enter bench method for a sequence.

6. Build list of inputs resolved to sequence and per sample.

7. Provide list of bench methods for a sequence.

8. Provide list of inputs resolved to sequence and per sample for a sequence.

9. Store input values.

C. Write modified bench methods and sequences to disk files

The Bench Supervisor system takes care of automatically writing modified bench methods and sequences to the disk.

IX. CP Module 10-10

Provides for user-programmed decision making within a bench method.

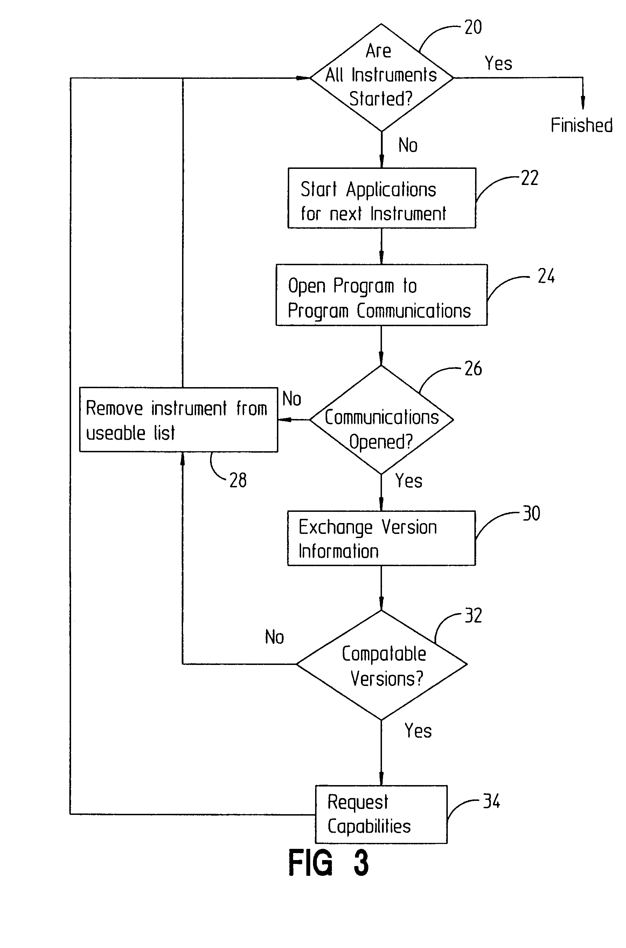

Figure 3 is a flow chart of a Configuration Startup program in accordance with the present invention. At block 20, a determination is made whether all instruments have been started; if so, the program is finished; if not, at block 22 the application for the next instrument is started. At block 24, program to program communications are opened. At block 26, a check is made whether communications with the instrument have been opened; if not, the instrument for which communications have not been opened is removed from a usable instruments list maintained by the Bench Supervisor system. At block 30, version information is obtained from the instrument. At block 32, a determination is made whether the instrument and the Bench Supervisor system versions are compatible; if not, at block 28 the incompatible instrument is removed from the usable instruments list. At block 34, the Bench Supervisor system acquires information from the instrument about its capabilities. The program then branches to decision block 20.

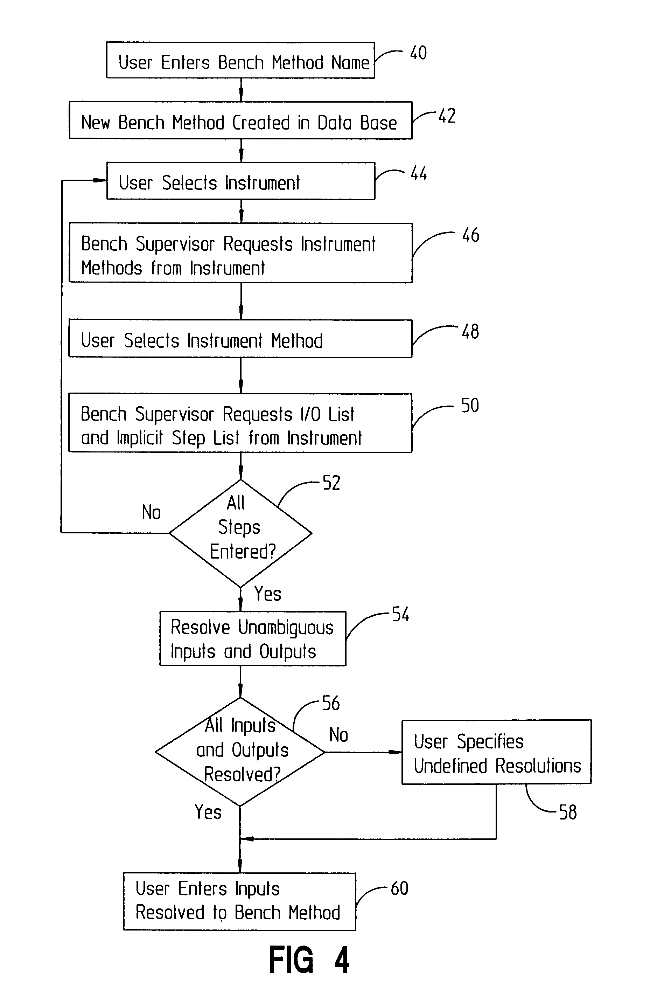

Figure 4 is a flow chart of a Bench Method preparation program in accordance with the present invention. At block 40, the user enters the bench method name. At block 42, a new bench method is created in the data base. At block 44, the user selects an instrument to be used in the bench method. At block 46, the Bench Supervisor system ascertains (requests) information from the selected instrument regarding the instrument methods available from the selected instrument. At block 48, the user selects an instrument method to be employed in the bench method. At block 50, the Bench Supervisor system requests an input/output list and an implicit steps list from the selected instrument. At block 52, a determination is made whether all instrument steps have been entered. If not, the program branches to block 44; if so, the program proceeds to block 54. At block 54, all unambiguous inputs and outputs are resolved. At block 56, a determination is made whether all inputs and outputs have been resolved; if not, the program branches to block 58; if so, the program proceeds to block 60. At block 58, the user specifies all undefined resolutions. At block 60, the user enters inputs resolved to the bench method.

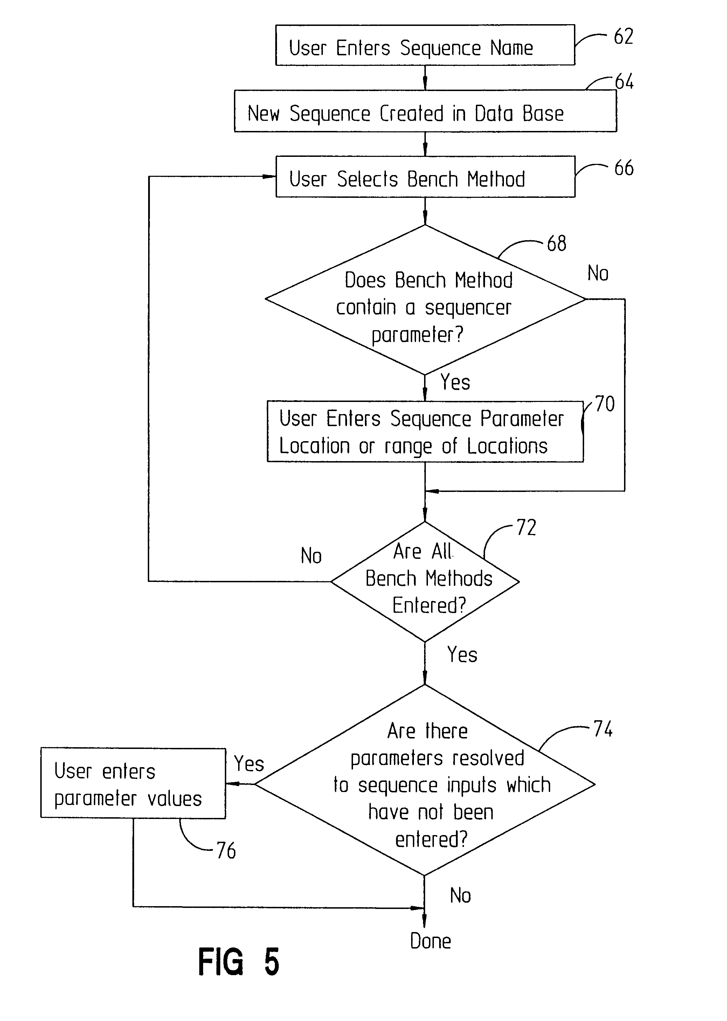

Figure 5 is a flow chart of a Sequence Preparation program in accordance with the present invention. At block 62, the user enters the sequence name. At block 64, a new sequence is created in the data base. At block 66, the user selects a bench method. At block 68, a determination is made whether the selected bench method contains a primary inout; if so, the program proceeds to block 70; if not, the program branches to block 72. At block 70, the user enters the location or range of locations of the primary inout contained in the selected bench method. At block 72, a determination is made whether all bench methods have been entered; if not, the program branches to block 66; if so, the program proceeds to block 74. At block 74, the program determines whether or not there are inputs resolved to sequence inputs which have not been entered; if not, the program is done; if so, the program branches to block 76. At block 76, the user enters the unentered input values.

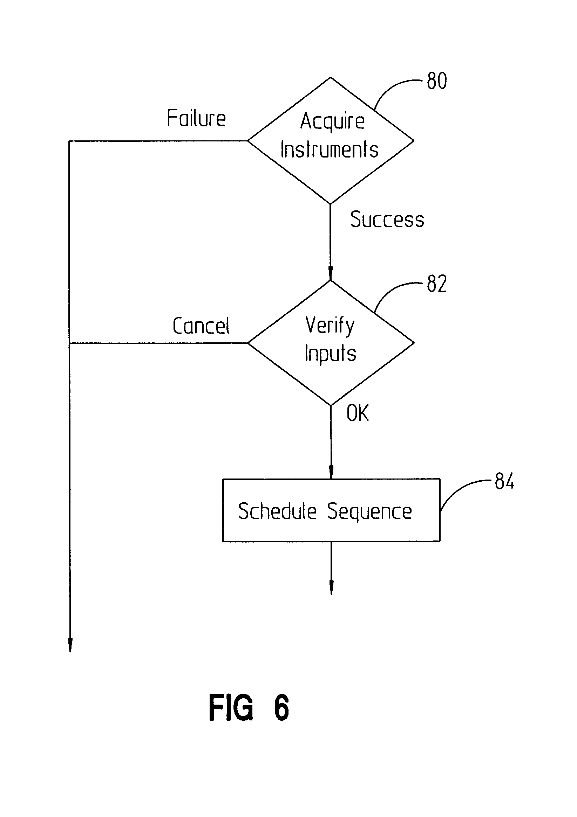

Figure 6 is a flow chart of a Start Sequence program in accordance with the present invention. At block 80, the program acquires the instruments required to carry out the desired bench sequence. If a failure occurs, the program notifies the user the sequence cannot be started. At block 82, the program verifies the inputs. If all inputs can be verified, the program proceeds to block 84. If all inputs cannot be verified, the sequence is not started. At block 84, the sequence is scheduled.

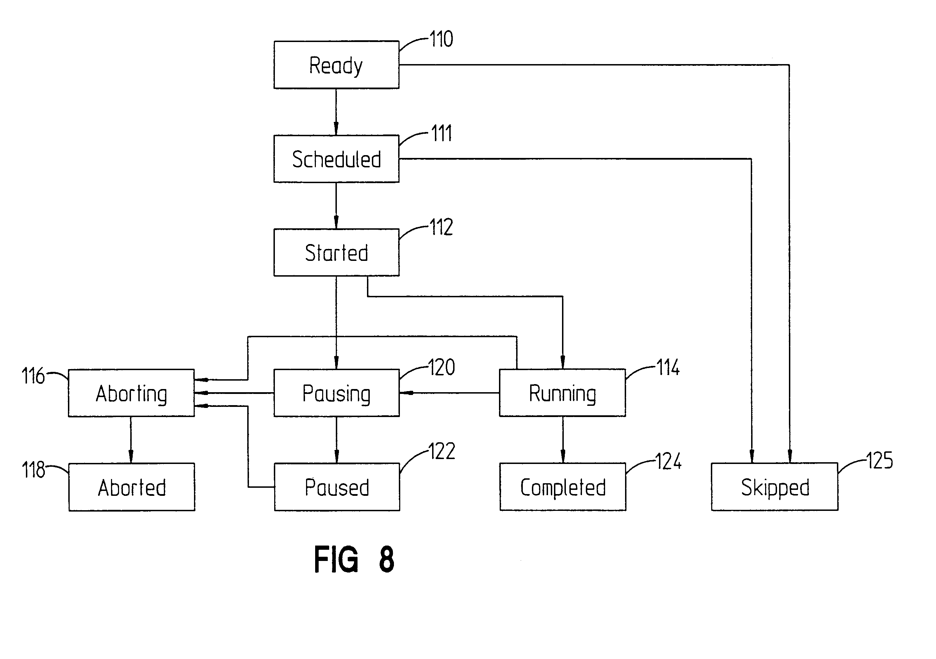

Figure 7 schematically depicts a Sequence state machine. In the state machine diagram, the rectangular boxes represent instrument states and the lines connecting one box to another represent state transitions. The circled numbers next to the respective state transition lines indicate the type of transition which that line represents. As shown, there are nine states in the Sequence state machine: Ready 90, Starting 91, Running 92, Unprepared 93, Aborting 94, Pausing 96, Paused 98, Completed 100, and Aborted 102. A sequence is a list bench method, sample pairs. Each pair specifies one bench method to be run on one sample once. If a bench method is to be run more than once on a sample the pair will be repeated. For each pair in a sequence a bench method state machine depicted in Figure 8 exists. Some of the transitions in Figure 7 depend on the combined states of all of the bench method state machines. A Start Sequence command effects the transition from the Ready State 90 to the Starting state 91. While the sequence state machine is in the starting state all of the instruments used in the sequence are acquired. If an instrument cannot be acquired the user is notified of the problem and the state machine goes back to the Ready state 90 and the sequence is not started. After all of the instruments are acquired a HOST_RESET command is sent to each one. The HOST_RESET command gives the instrument application a chance to initialize any conditions in the application or instrument before the sequence actually starts. Again if any HOST_RESET fails the state machine goes back to the Ready state 90 and does not start the sequence. Finally in the starting state the sequence is verified. Verification consists of requesting time stamps from each instrument application for each instrument method to be run as part of the sequence. The time stamps are compared with time stamps which were stored as part of the Bench Methods used in the sequence. If any instrument time stamp is newer then the corresponding time stamp in the Bench Method then the instrument method was changed since the Bench Method was prepared. Changing the instrument method may have changed the inputs or outputs required by the instrument method which would invalidate the Bench Method. The Bench Supervisor requests the IO list for the instrument method and compares it with the original IO list stored as part of the Bench Method. If the IO lists compare then the Bench Method is still valid. If they do not compare then both the bench method and the sequence are set to unprepared states. Setting the sequence to Unprepared causes the transition from the Starting state 91 to Unprepared state 93. If the verify sequence succeeds then the sequence state machines state is set to Running state 92. A Pause Sequence command effects the transition from the Running state 92 to the Pausing state 96. An Abort sequence command effects the transition from the Running state 92 to the Aborting state 94. An Abort Sequence command effects the transition from the Pausing state 96 to the Aborting state 94. When all of the Bench Method state machines are in the Blocks Completed state (Figure 8, state 124) effects the transition from the Running State 92 to the Completed state 100 is effected. An. When all of the Bench Method state machines are in either the Completed state (Figure 8 state 124) or signal, where at least one step is to be Paused state (Figure 8 state 122) with at least one Bench Method in the Paused state, effects the transition from the Pausing state 96 to the Paused State 98 is effected. When all of the Bench Method state machines are in either the Completed state (Figure 8 state 124) or Aborted state (Figure 8 state 122) with at least one Bench Method in the Aborted state, effects the transition from A signal to abort at least one block effects a transition from the Aborting state 94 to the Aborted state is effected.

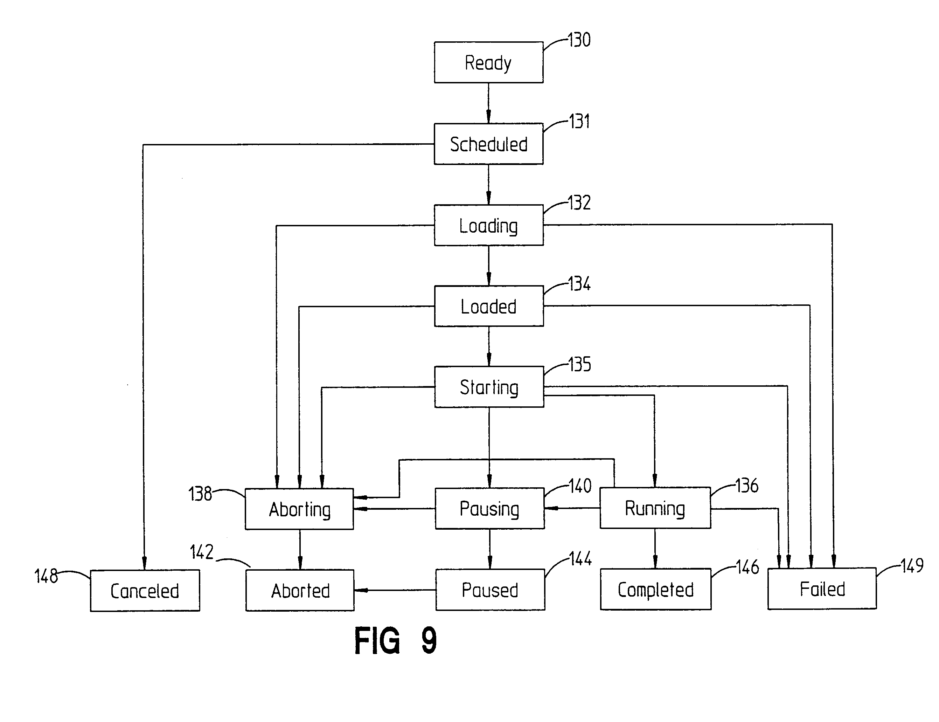

Figure 8 is a schematic depiction of a Bench Method state machine in accordance with the present invention. The Bench Method state machine is comprised of the ten states: a Ready state 110, a Scheduled state 111, a Starting state 112, a Running state 114, an Aborting state 116, an Aborted state 118, a Pausing state 120, a Paused state 122, and a Completed state 124, and a Skipped state 125. A Bench Method consists of one or more instrument steps. For each instrument step in a bench method an instrument step state machine (Figure 9) exists. Some of the transitions of the Bench Method State machine are dependent on one or more of the states of the Instrument Step state machines for the instrument steps belonging to the Bench Method. A Bench Method is always run as part of a sequence. Some of the state transitions of the Bench Method are dependent on the current state of the Sequence State machine which is controlling the currently running sequence which contains the bench method. Other transitions are dependent upon the states of other Bench Method state machines for the same sequence. The transition from the Ready state 110 to the Scheduled state 1112 is effected when the bench method is the earliest bench method in a sequence which is still in the Ready state and none of the previous bench methods block are not in the Scheduled or Started states. The transition from the Schedule state 111 to the Started state 112 takes place when all physical inputs required by the bench method which were used in previous Bench Methods have been returned to their original location. The transition from the Started state 112 to the Running state 114 is effected when at least one of the instrument step state machines blocks is in the Running state. The transition from the Started state 112 to the Pausing state 120 is effected when the sequence is in the Pausing state. The transition from the Running state 114 to the Aborting state 116 is effected when the sequence is in the Aborting state. The transition from the Running state 114 to the Pausing state 120 is effected when the sequence is in the Pausing state and all instrument steps states in the bench method are pausable or the instrument step state machines have gone to a Terminal state. The transition from the Pausing state 120 to the Aborting state 116 is effected when the sequence is in the Aborting state. The transition from the Paused state 122 to the Aborting state 118 is effected when the sequence is in the Aborting state. The transition from the Running state 114 to the Completed state 124 is effected when all instrument step state machines blocks have gone to a completed or skipped state. The transition from the Pausing state 120 to the Paused state 122 is effected when all instrument step state machines blocks are in one of the completed, skipped or paused states, and at least one instrument step state machine block is in the paused state. The transition from the Aborting state 116 to the Aborted block 118 is effected when all instrument step state machines blocks are in one of the completed, skipped or paused states, and at least one instrument step state machine block is aborted. The transitions from Ready state 110 to Skipped state 125 and from Scheduled state 111 to Skipped state 125 are effected by a CP instruction.

Figure 9 is a schematic depiction of an Instrument Step state machine in accordance with the present invention. This state machine comprises: a Ready state 130, a Scheduled state 131, a Loading state 132, a Loaded state 134, a Starting state 135, a Running state 136, an Aborting state 138, a Pausing state 140, an Aborted state 142, a Paused state 144, a Completed state 146, and a Canceled state 148. The transition from the Ready state 130 to the Schedule state 131 the Loading state 132 is effected when the bench method is in the Starting or Running state., The transition from the Scheduled state 131 to the Loading state 132 occurs when all of the required inputs are in the Ready state and, all of the required outputs are in the Enabled state and the instrument specified for the step is available. A HOST__LOAD command is sent to the instrument when the transition occurs. The transition from the loading state 132 to the loaded state 134 is effected when the instrument application sets its step status to loaded. The transition from the loading state 132 to the Aborting state 138 occurs when the bench method state machine is in the Aborting state. The transition from the loading state 132 to the Failed state 149 occurs when the instrument application sets its step status to Failed. The transition from the Loaded state 134 to the Starting state 135 is effected when the instrument status is Ready and a HOST__RUN command is sent to the instrument. The transition from the loaded state 134 to the Pausing state 140 is effected when the bench method state machine status is Pausing. The transition from the loaded state 134 to the Aborting state 138 occurs when the bench method state machine is in the Aborting state. The transition from the loaded state 134 to the Failed state 149 occurs when the instrument application sets its step status to Failed. The transition form the Starting state 135 to the Running state 136 occurs when the instrument application sets its status to Running. The transition from the Starting state 135 to the Aborting state 138 occurs when the bench method state machine is in the Aborting state. The transition from the Starting state 135 to the Failed state 149 occurs when the instrument application sets its step status to Failed. The transition from the Running state 136 to the Aborting state 138 is effected when the bench method state machine status is Aborting. The transition from the Running state 136 to the Pausing state 140 is effected when the bench method state machine status is Pausing. The transition from the Pausing state 140 to the Aborting state 138 is effected when the bench method state machine status is Aborting. The transition from the Running state 136 to the Completed state 146 is effected when the instrument step status is Completed. The transition from the Running state 136 to the Failed state 149 occurs when the instrument application sets its step status to Failed. The transition from the Pausing state 140 to the Paused state 144 is effected when the instrument step status is Paused. The transition from the Aborting state 138 to the Aborted state 1420 is effected when the instrument step status is Aborted. The transition from the Scheduled state 131 to the Canceled state 148 is effected when the output to which a control-type input is connected has been set to the Cancelled state.

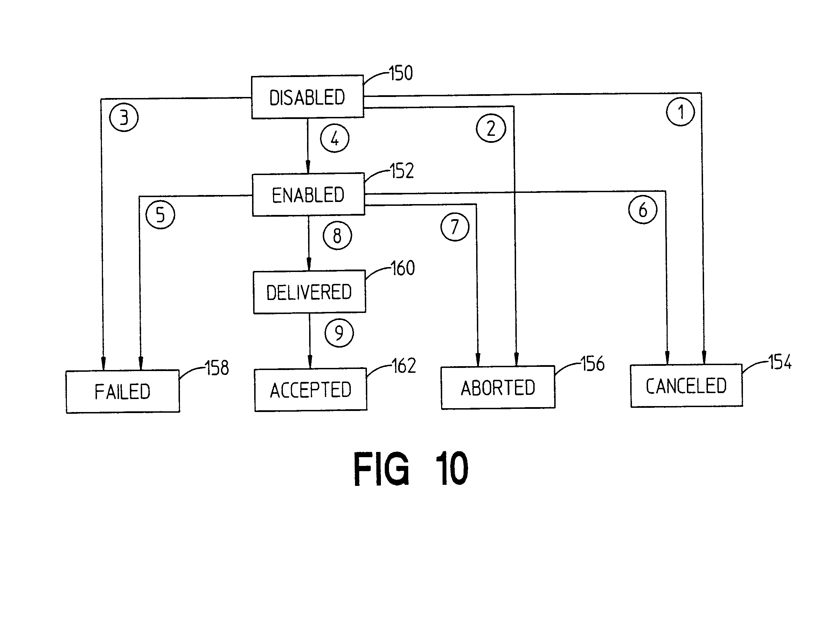

Figure 10 is a schematic depiction of an Input Data Input state machine. This state machine comprises: a Disabled state 150, an Enabled state 152, a Cancelled state 154, an Aborted state 156, a Failed state 158, a Delivered state 160, and an Accepted state 162. The transition from the Disabled state 150 to the Cancelled state 154 is effected when the output parameter to which the input was resolved is set to Cancelled. The transition from the Disabled state 150 to the Aborted state 156 is effected when the output parameter to which the input is resolved is set to Aborted. The transition from the disabled state 150 to the Failed state 158 is effected when the output parameter to which the input is resolved is to Failed. The transition from the Disabled state 150 to the Enabled state 152 is effected when the instrument application sets the input status to Enabled. The transition from the Enabled state 152 to the Failed state 158 is effected when the output parameter to which the input is resolved is set to Failed. The transition from the Enabled state 152 to the Cancelled state 154 is effected when the output parameter to which the input is resolved is set to Cancelled. The transition from the Enabled state 152 to the Aborted state 156 is effected when the output parameter to which the input is resolved is set to aborted. If the input is resolved to a bench method, sequence, or sequence step input the transition from the Enabled state 152 to the Delivered state 160 is effected when the Bench Supervisor system sets Status to Delivered after it has set the data value, which will occur as soon as the input is enabled. if the parameter is resolved to a bench method, sequence, or sequence step input; if the input is resolved to an output, the transition will occur when the output is set to Ready. In either case the Bench Supervisor sets the instruments input value for the input immediately before the state transition. The transition from the Delivered state 160 to the Accepted state 162 is effected when the instrument application sets the input status to Accepted.

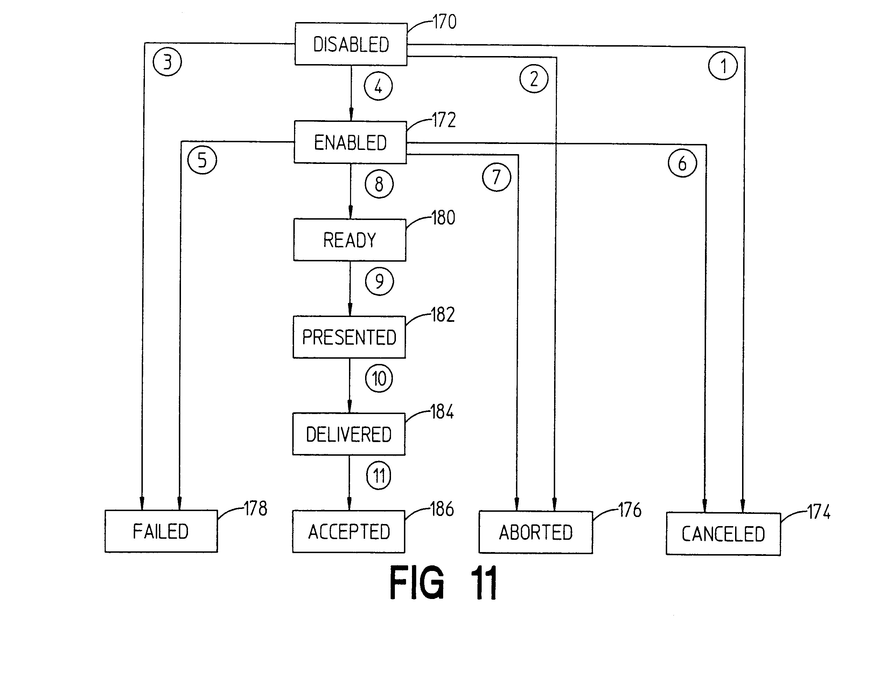

Figure 11 is a schematic depiction of an Input For Transported Physical Input state machine. This state machine comprises: a Disabled state 170, an Enabled state 172, a Cancelled state 174, an Aborted state 176, a Failed state 178, a Ready state 180, a Presented state 182, a Delivered state 184, and an Accepted state 186. The transition from the Disabled state 170 to the Cancelled state 174 is effected when the output parameter to which the input is resolved is set to Cancelled. The transition from the Disabled state 170 to the Aborted state 1764 is effected when the output parameter to which the input is resolved is set to Aborted. The transition from the Disabled state 170 to the Failed state 178 is effected when the output parameter to which the input is resolved is set to Failed. The transition from the Disabled state 170 to the Enabled state 172 is effected when the instrument application sets the input status to Enabled. The transition from the Enabled state 174 to the Failed state 178 is effected when the output parameter to which the input is resolved is set to failed. The transition from the Enabled state 172 to the Cancelled state 174 is effected when the output parameter to which the input is resolved is set to Cancelled. The transition from the Enabled state 172 to the Aborted state 176 is effected when the output parameter to which the input is resolved is set to Aborted. The transition from the Enabled state 172 to the Ready state 180 is effected when the output transport parameter is set to Ready by the transport device. The transition from the Ready state to the Presented state 182 is effected when the instrument application sets the input status to Presented. The transition from the Presented state 182 to the Delivered state 184 is effected when the output transport parameter is set to Deliver by the transport device. The transition from the Delivered state 184 to the Accepted state 186 is effected when the instrument application sets the input status to Accepted.

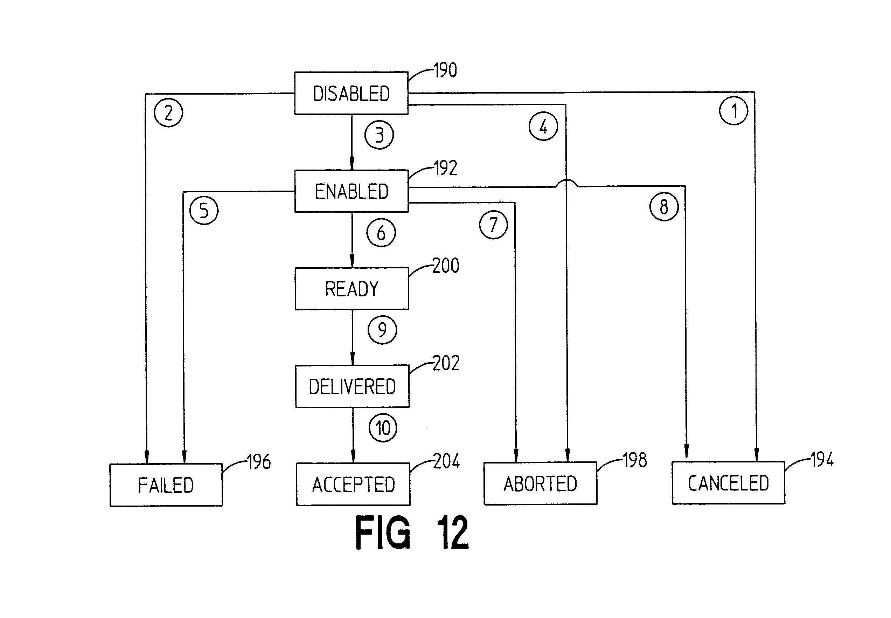

Figure 12 is a schematic depiction of an Input For Transport Physical Parameter state machine. This state machine comprises: a Disabled state 190, an Enabled state 192, a Cancelled state 194, a Failed state 196, an Aborted state 198, a Ready state 200, a Delivered state 202, and an Accepted state 204. The transition from the Disabled state 190 to the Cancelled state 194 is effected when the output parameter to which the input is resolved is set to cancelled. The transition from the Disabled state 190 to the Failed state 196 is effected when the output parameter to which the input is resolved is set to Failed. The transition from the Disabled state 190 to the Enabled state 192 is effected when the instrument application sets the input status to Enabled. The transition from the Disabled state 190 to the Aborted state 194 is effected when the output parameter to which the input is resolved is set to Aborted. The transition from the Enabled state 192 to the Failed state 196 is effected when the output parameter to which the input is resolved is set to Failed. The transition from the Enabled state 192 to the Ready state 200 is effected when the output parameter to which the input is resolved is set to Presented. The transition from the Enabled state 192 to the Aborted state 198 is effected when the output parameter to which the input is resolved is set to Aborted. The transition from the Enabled state 192 to the Canceled state 194 is effected when the output to which the input is resolved is set to Canceled. The transition from the Ready state 200 to the Delivered state 202 is effected when the transport instrument application sets its input the parameter status to Delivered. The transition from the Delivered state 202 to the Accepted state 204 is effected when the transport instrument application sets the input status to Accepted when the output status for the output is set to Accepted.

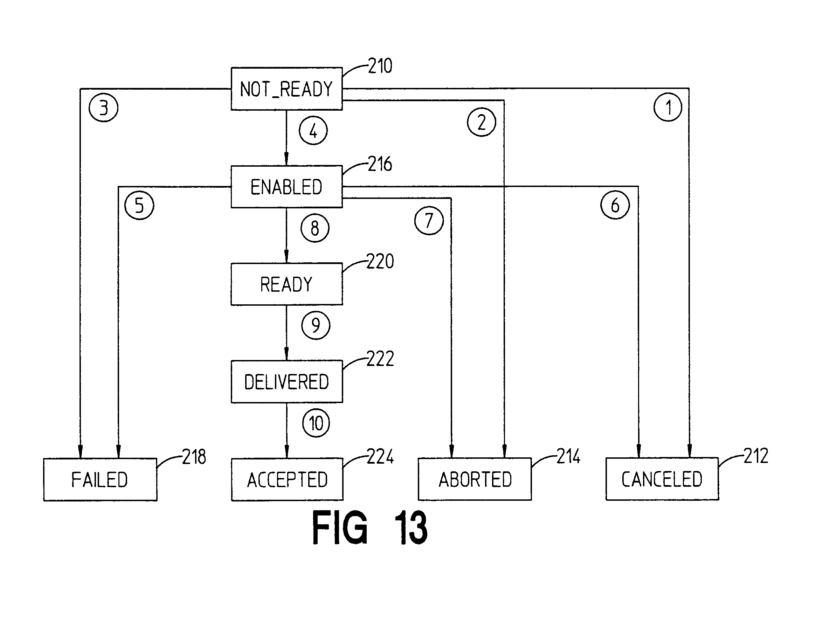

Figure 13 is a schematic depiction of an Output Data Parameter state machine. This state machine comprises: a Not__Ready state 210, a Cancelled state 212, an Aborted state 214, an Enabled state 216, a Failed state 218, a Ready state 220, a Delivered state 222, and an Accepted state 224, and an Aborted state 214. The transition from the Not__Ready state 210 to the Cancelled state 212 is effected when the instrument application sets the output status to Cancelled or the state of the bench method step state machine is Canceled. The transition from the Not__Ready state 210 to the Aborted state 214 is effected when the instrument application sets the output status Aborted or the state of the bench method step state machine is Aborted.. The transition from the Not__Ready state 210 to the Failed state 218 is effected when the instrument application sets the output parameter status to Failed. The transition from the Not__Ready to the Enabled state 216 is effected when the parameter is resolved to the input parameter to another step; otherwise, the status is set to Enabled when the instrument sets the step status to Loaded. The transition from the Enabled state 216 to the Failed state 218 is effected when the instrument application sets the output status to Failed or the bench method step state machine goes to the Failed state. The transition from the Enabled state 216 to the Cancelled state 212 is effected when the instrument application sets the output status to Cancelled or the state of the bench method step state machine is Canceled. The transition from the Enabled state 216 to the Aborted state 214 is effected when the instrument application sets the output status to Aborted. The transition from the Enabled state 216 to the Ready state 220 is effected when the instrument application sets the output status to Ready. The transition from the Ready state 220 to the Delivered state 222 is effected when the value has been delivered to all inputs resolved to the output. The transition from the Delivered state 222 to the Accepted state 224 is effected when the status of all inputs to which the output is resolved has been set to Accepted.

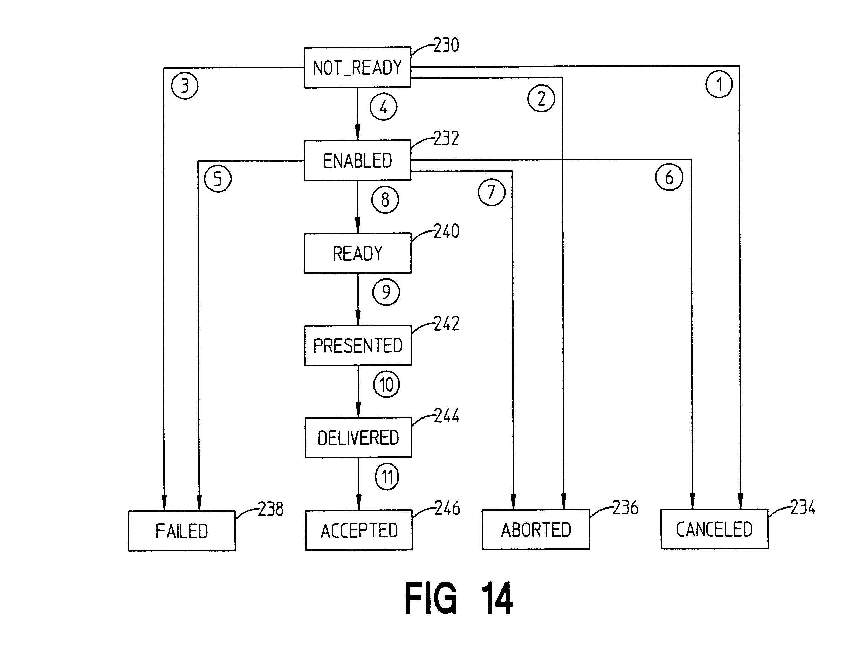

Figure 14 is a schematic depiction of an Output For Transport Physical Output state machine. This state machine comprises: a Not__Ready state 230, an Enabled state 232, a Cancelled state 234, an Aborted state 236, a Failed state 238, a Ready state 240, a Presented state 242, a Delivered state 244, and an Accepted state 246. The transition from the Not__Ready state 230 to the cancelled state 234 is effected when the instrument application sets the output parameter status to Cancelled or the bench method step state machine is in the Canceled state. The transition from the Not_Ready state 230 to the Aborted state 236 is effected when the instrument application sets the output status to Aborted or the bench method step state machine is in the Aborted state. The transition from the Not_Ready state 230 to the Failed state 238 is effected when the instrument application sets the output status to Failed or the bench method step state machine is in the Failed state. The transition from the Not_Ready state 230 to the Enabled state 232 is effected when the input it is resolved to in another step is set to Enabled; otherwise, the status is set to Enabled when the instrument application sets the step status to Loaded. The transition from the Enabled state 232 to the Failed state 238 is effected when the instrument application sets the output status to Failed or the bench method step state machine is in the Failed state. The transition from the Enabled state 232 to the Cancelled state 234 is effected when the instrument application sets the output status to Cancelled or the bench method step state machine is in the Canceled state. The transition from the Enabled state 232 to the Aborted state 236 is effected when the instrument application sets the output status to Aborted or the bench method step state machine is in the Aborted state. The transition from the Enabled state 232 to the Ready state 240 is effected when the instrument application sets the output status to Ready. The transition from the Ready state 240 to the Presented state 242 is effected when the input parameter to which this output is resolved is set to Presented. The transition from the Presented state 242 to the Delivered state 244 is effected when the instrument application sets the output status to Delivered. The transition from the Delivered state 244 to the Accepted state 246 is effected when the input parameter to which this output is resolved is set to Accepted.

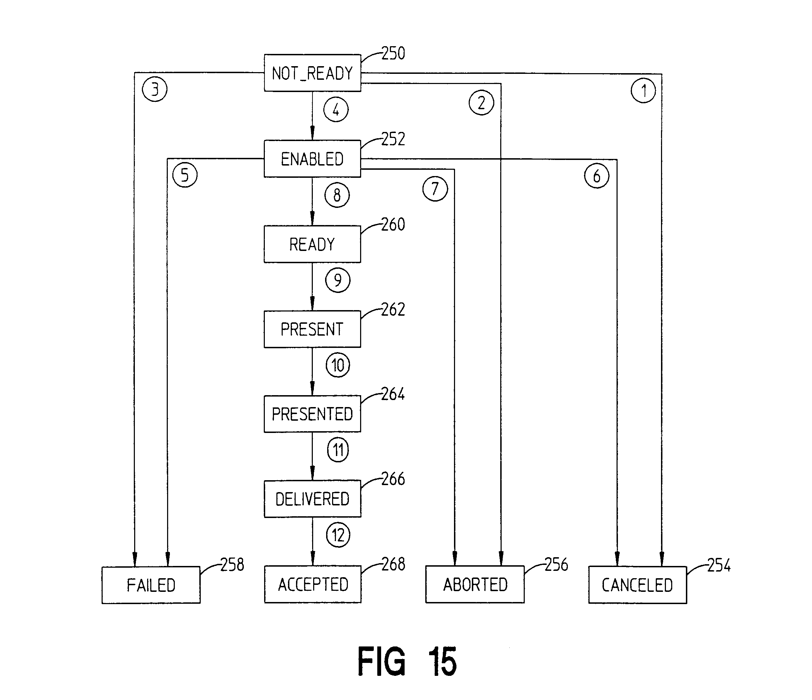

Figure 15 is a schematic depiction of an Output For Transported Physical Output state machine. This state machine comprises: a Not_Ready state 250, an Enabled state 252, a Cancelled state 254, an Aborted state 256, a Failed state 258, a Ready state 260, a Present state 262, a Presented state 264, a Delivered state 266, and an Accepted state 268. The transition from the Not_Ready state 250 to the Cancelled state 254 is effected when the instrument application sets the output status to Cancelled or the bench method step state machine is in the Canceled state. The transition from the Not_Ready state to the Aborted state 256 is effected when the instrument application sets the output status to Aborted or the bench method step state machine is in the Aborted state; likewise, the transition from the Not_Ready state 250 to the Failed state 258 is effected when the instrument application sets the output status to Failed or the bench method step state machine is in the Failed state. If the output is resolved to an input then the transition from the Not_Ready state to the Enabled state 254 is effected when the parameter is resolved to the input parameter to another step and the input parameter is set to Enabled; otherwise, the status is set to Enabled when the Instrument Sets Step status is set to Loaded. The transition from the Enabled state 252 to the Failed state 258 is effected when the instrument application sets the output status to Failed or the bench method step state machine is in the Failed state. The transition from the Enabled state 252 to the Cancelled state 254 is effected when the instrument application sets the output status to Cancelled or the bench method step state machine is in the Canceled state. The transition from the Enabled state 252 to the Aborted state 256 is effected when the instrument application sets the output status to Aborted or the bench method step state machine is in the Aborted state. The transition from the Enabled state 252 to the Ready state 260 is effected when the instrument application sets the output status to Ready. The transition from the Ready state 260 to the Present state 262 is effected when the input status of the transport input for this output is enabled. The transition from the Present state 262 to the Presented state 264 is effected when the instrument application sets the output status to Presented. The transition from the Presented state 264 to the Delivered state 266 is effected when the input status of the transport input for this output is delivered. The transition from the Delivered state 266 to the Accepted state 268 is effected when the input status of the transport input for this output is accepted.

## B. Description of System Operation From User's Perspective

As discussed above, the Bench Supervisor system is a program that coordinates the activities of compatible instruments. The Bench Supervisor system will run methods from instrument applications, such as the Hewlett Packard HP7686 Sample Prep Station module and a Hewlett Packard HP3365 Gas Chromatograph Chem Station. The Bench Supervisor system allows the user to create a fully automated laboratory bench. Using the methods from the instrument applications to build a Bench Supervisor method, the user can automatically process and analyze samples. Bench methods can, in turn, be assembled to create Bench Sequences to process multiple samples. Using bench methods and sequences, the Bench Supervisor system tells each instrument application when to run a particular method and tracks the input and output vials.

15

For example, using The Bench Supervisor system, the user could:

1. Prepare a sample and add an internal standard using the Hewlett Packard (HP) HP7686 Prep Station sample preparation module.

2. Analyze the resulting sample in the Hewlett Packard HP5890 Gas Chromatograph.

After one instrument method is completed, the Bench Supervisor system can pass on the location of its output vial(s) to the next application for use as input.

For example, the following instruments are supported by one presently preferred embodiment of The Bench Supervisor system:

- Hewlett Packard HP7686 Prep Station sample preparation module sample preparation module (HP G1204A)
- with Automated tray and roto bar code reader (Hewlett Packard HP7673);
- Hewlett Packard HP Gas Chromatography Personal Chemstation (HP3365) with ;
- Hewlett Packard HP5890 Gas Chromatograph (HP5890);
- HP Liquid Chromatograph;
- Hewlett Packard Mass Spectrometer Chemstation (G1034B) with HP Gas Chromatograph/Mass Spectrometer (HP5971).

As described above, a bench method is a series of methods used to run each of the instruments running under The Bench Supervisor system. For example, a typical bench method might include a method from the HP7686 Prep Station sample preparation module and one from the HP5890 Gas Chromatograph.

It is best to design bench methods which accomplish a single task or process a single sample. For example, instead of having one bench method prepare and analyze sample A, and then prepare and analyze sample B, etc., it is best to create a separate bench method for both samples A and B. The simpler a bench method is, the more the user will be able to reuse it in different bench sequences.

It should be noted that instrument application methods typically handle one aspect of sample analysis, such as analyte extraction, sample extraction, sample preparation, or the actual analysis. Bench methods assemble the methods from these different instrument applications to process a sample from start to finish. The bench sequence assembles these bench methods to provide uninterrupted processing of numerous samples.

A sample is the vial containing the material to be analyzed and is not a resource. Resources are the vial and data inputs used by the instrument methods in the bench method to process a primary sample but which are not part of the sample. For example resource might be a vial containing a solvent which will be added to a sample. A primary sample is the vial containing the material to be analyzed and is not a resource.

Each instrument method in the bench method requires certain inputs, such as vials and data files. After processing the sample(s), the instrument method outputs one or more vials and/or reports which can, in turn, be used as inputs (or resources) for the next method. The Bench Supervisor system tracks the inputs and outputs for each instrument method and passes this resource information along to the next instrument method. For example, the Bench Supervisor system tracks the following types of inputs and outputs:

**Vial Inputs** - The Bench Supervisor system tracks which vials are needed by the instrument application methods in the bench method and where the vials are located.

**Data Inputs** - The Bench Supervisor system keeps track of what files and data are needed by the instrument application methods in the bench method.

**Vial Outputs** - The Bench Supervisor system tracks the name and locations of the vials produced by the previous instrument applications and provides that information to the following applications.

**Data Outputs** - The Bench Supervisor system keeps track of what reports and data files are produced by each instrument application.

Before running a bench method or sequence, the user must specify where each resource is located by entering its vial position or file name. Then, the Bench Supervisor system will track all of the resources, making them available as called for by each successive instrument method in the bench method.

The Bench Supervisor system saves all of the bench methods and sequences in a database file rather than in separate DOS files. This allows the user to have several different sets of bench sequences and methods without having to maintain separate directories. Each person in the laboratory that maintains a separate set of bench methods and sequences can easily switch to his or her own database without restarting the Bench Supervisor software.

There are two basic ways to move between instrument applications in the Bench Supervisor system. JCON is a task switching box displayed at the bottom right corner of the screen. See Figure 16. Each instrument application running under the Bench Supervisor system has its own icon in the JCON box that the user can click on to display the screen for that application. The icon for the current application remains highlighted in the JCON box.

To move between the Bench Supervisor system and the instrument applications, click on the icon of the selected instrument in the JCON box. The window for that instrument application is displayed and any other Bench Supervisor or instrument windows are hidden.

Bench Supervisor has four buttons at the top of the main screen which, when clicked, bring up their own menu bars. The four buttons and their functions are:

**Bench Method Button** - Click this button to open a menu that allows the user to open and manipulate bench method files.

**Run Button** - Click this button to open a menu that allows the user to run bench methods and sequences and to edit sequences.

**Utilities Button** - Click this button for a menu of general Bench Supervisor utilities that let the user: set the display preferences; access the database; define the resources.

**Help Button** - Opens a menu of on-line help categories.

**Sequence Status Window**

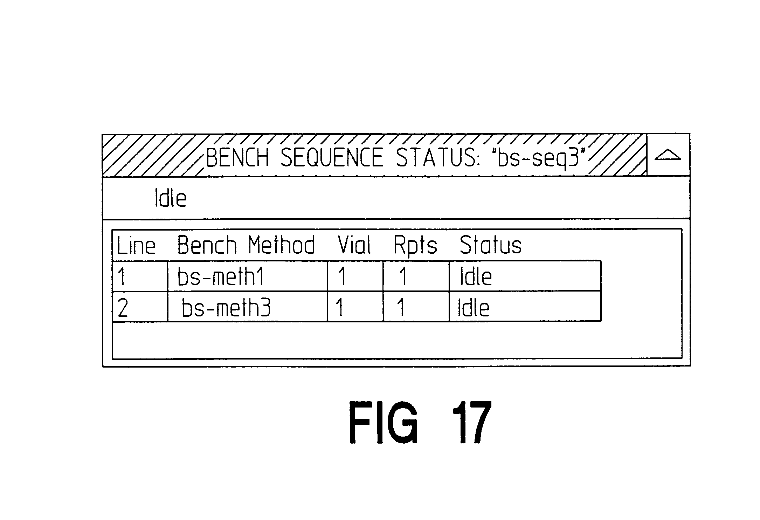

To display the Sequence Status window, click the Utilities button to open the Utilities menu. Click Preference and then click Show Bench Sequence Status until a check mark appears next to it. See Figure 17.

This window displays the status of the sequence currently loaded. It shows the name of the current sequence, the bench methods that compose the sequence, and the status of the sequence.

**Possible Statuses** - If the sequence is running, the Sequence status window will also show the current status of each bench method in the sequence. Each bench method could be in one of the following states: Completed - the bench sequence has finished a successful run; No Sample Queue - either the bench sequence was just created and no bench methods were assigned to it or the active data base is a new one without any bench methods or sequences; Ready - the bench method has completed its run or is ready to be run; Running - this status is displayed for the bench method currently running; Aborted - if an error is encountered while running the bench sequence, the method is terminated and an Aborted status is displayed.

**Method Status Window**

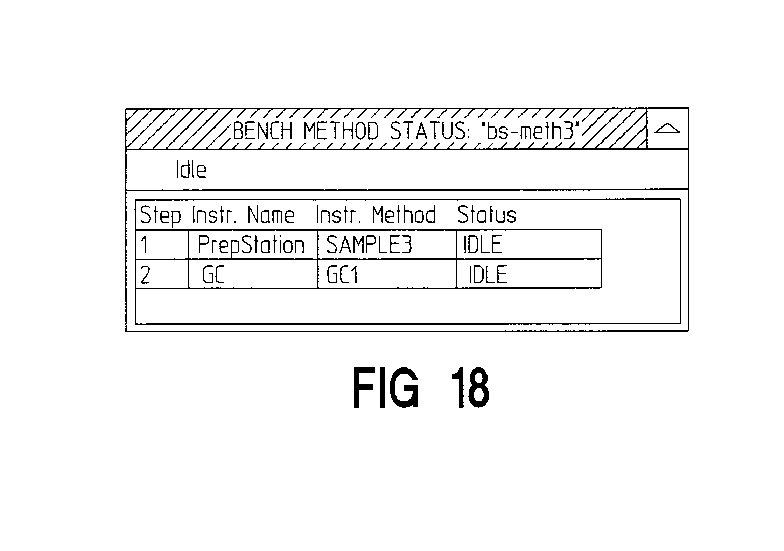

This window displays the status of the method currently loaded. It shows the name of the current method, the instrument methods that compose the bench method, and the status of the bench method. See Figure 18.

To display the Method Status Window, click the Utilities button to open the Utilities menu. Click Preferences and then click Show Bench Method Status until a check mark appears next to it.

**Status of the Bench Methods** - The status bar is a colored bar underneath the title bar on the Bench Method Status window. It will display one of the following possible statuses for the current bench method.

**No Instrument Steps** - The current bench method has no steps. This message is displayed after the user creates a new bench method or a new data base.

**Failed** - The sequence that was running failed due to errors.

**Ready** - The bench method is ready to run alone or in a sequence.

**Starting** - Bench Supervisor is instructing the instrument application for step one to load the first instrument method.

**Running** - One of the steps in the bench method is currently running.

**Aborting/Aborted** - The Abort command was chosen from the Run Bench Method menu option on the Runs menu or the bench method aborted due to an error reported by an instrument application.

**Missing Vial or Data Inputs** - Bench Supervisor does not know the location of a vial or a data file called for by the instrument methods involved. If the user is going to run this method by itself (not from within a sequence) the user must enter the Vial or Data inputs.

**Unprepared** - Bench Supervisor cannot locate one of the instrument method files or an instrument method has been changed since this bench method was last loaded.

**Status of Instrument Methods** - The status of each instrument method appears in the Status box of the step in which the method appears. The following are some of the possible statuses of the instrument methods in a bench method and what each status means:

**Ready** - This method is prepared to run.

17

**Scheduled** - The bench method has started running and this instrument method is scheduled to be run but has not yet started.

**Loading** - Instrument application is loading the method listed in the Instrument Method box.

**Starting** - The instrument application is starting the first step of the instrument method.

**Running** - The instrument application is now running the instrument method.

**Aborted** - Due to an error reported by the instrument application, this run was aborted.

**Cancelled** - A previous instrument method aborted on errors which cancelled the runs of all subsequent methods.

**Completed** - This instrument method successfully completed its run.

## CREATING A NEW BENCH METHOD

After methods have been created in the instrument applications, they can assemble them into a bench method.

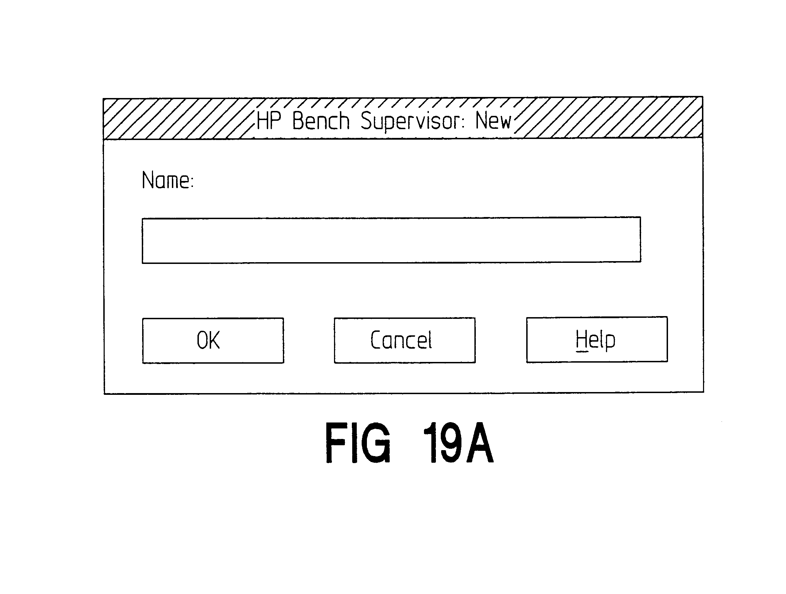

1. Referring to Figure 19A, click the Bench Method button to open the Bench Method menu. Click File and then click New Bench Method.

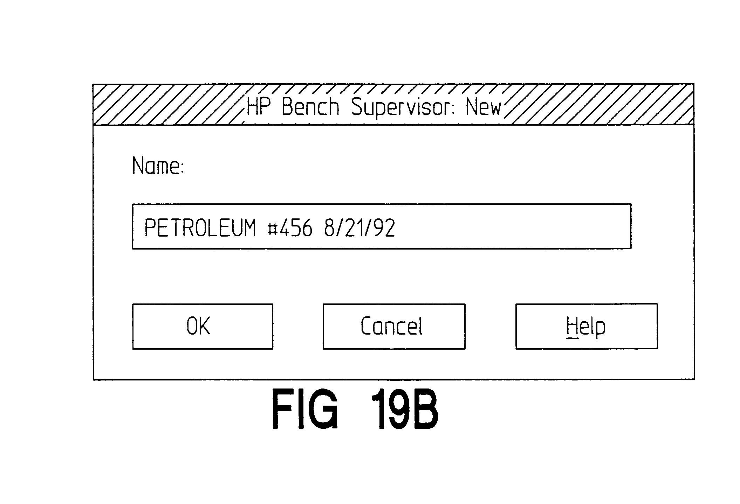

2. Type a name for the bench method and then click OK. See Figure 19B.

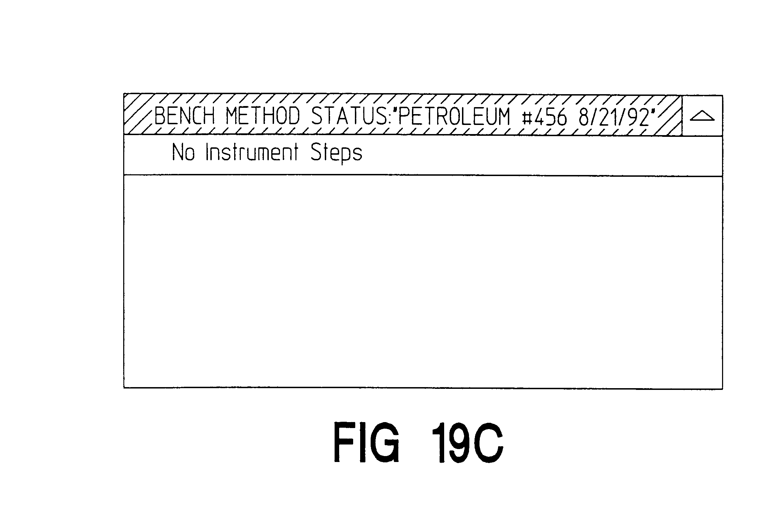

If Show Bench Method Status is checked, the top of the bench method status window will display the name of the new bench method, as shown in Figure 19C. The status bar on this window will read No Instrument Steps until instrument steps are added to the method. An instrument step may consist of name of the instrument and the instrument method it will run.

### Assigning instrument steps to a bench method

An instrument step is a method from one of the instrument applications running under the Bench Supervisor system. A series of these steps makes up a bench method. Follow the procedures outlined below to add, delete, or change the instrument steps for a bench method.

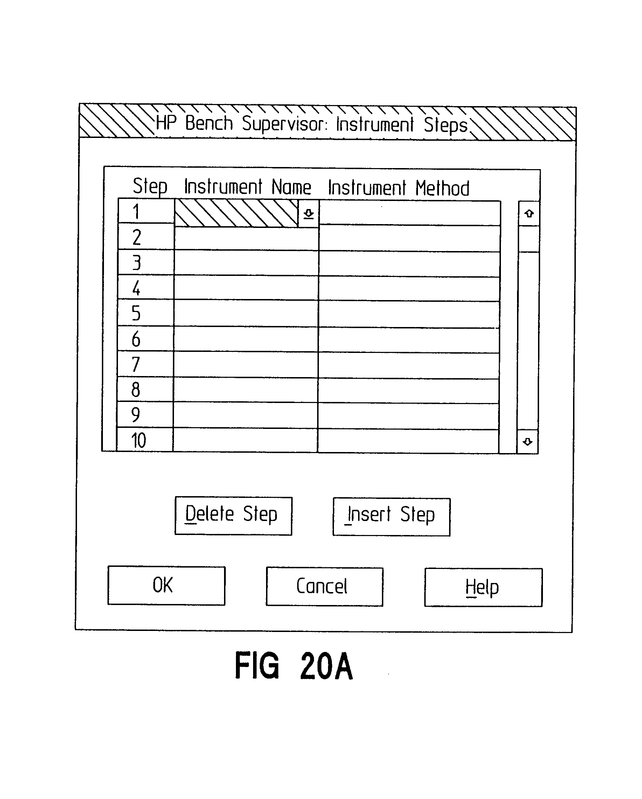

1. To assign instrument steps to the bench method, click Edit on the menu bar and then click Instrument Steps. See Figure 20A.

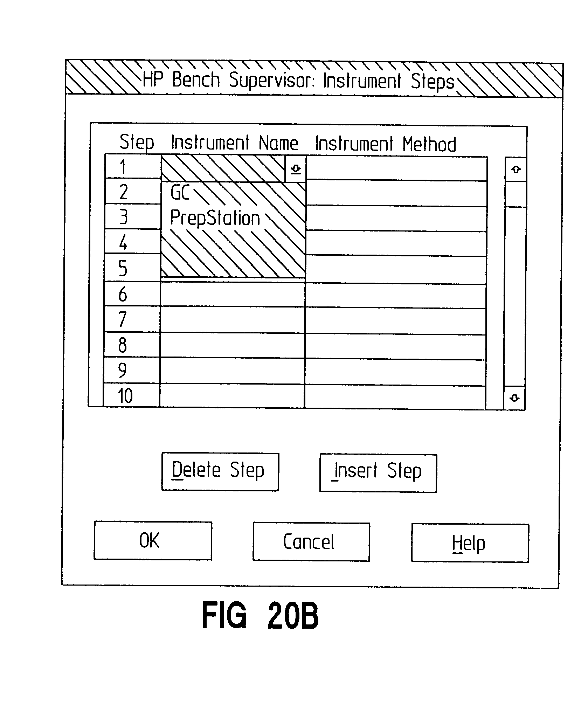

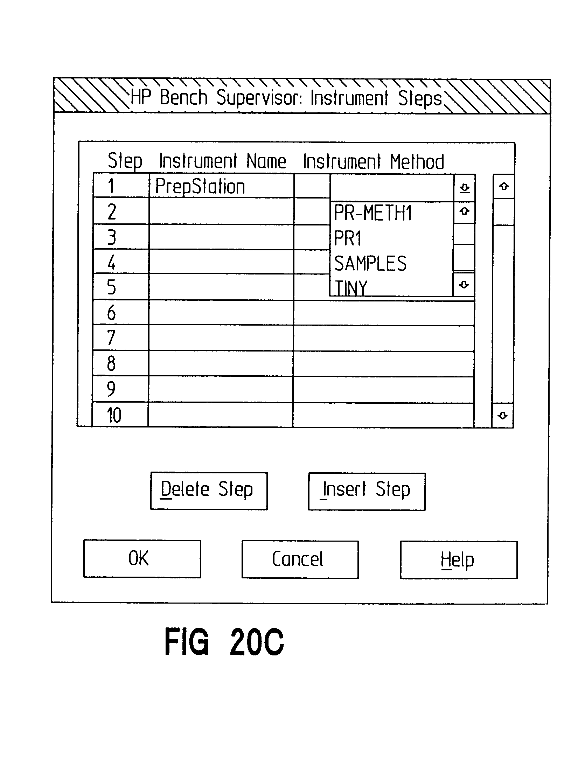

2. Click the down arrow next to the first Instrument name box to display a list of all of the instrument applications. See Figure 20B.

3. Click on the name of the instrument that will be used for the first step in this bench method.

4. Click on the first box in the Instrument Method column and click the down arrow to display a list of all of the existing methods for the selected instrument. See Figure 20C.

5. Click on the appropriate instrument method.

6. To delete a step, click on the step and then click the Delete Step.

### Vial transfers

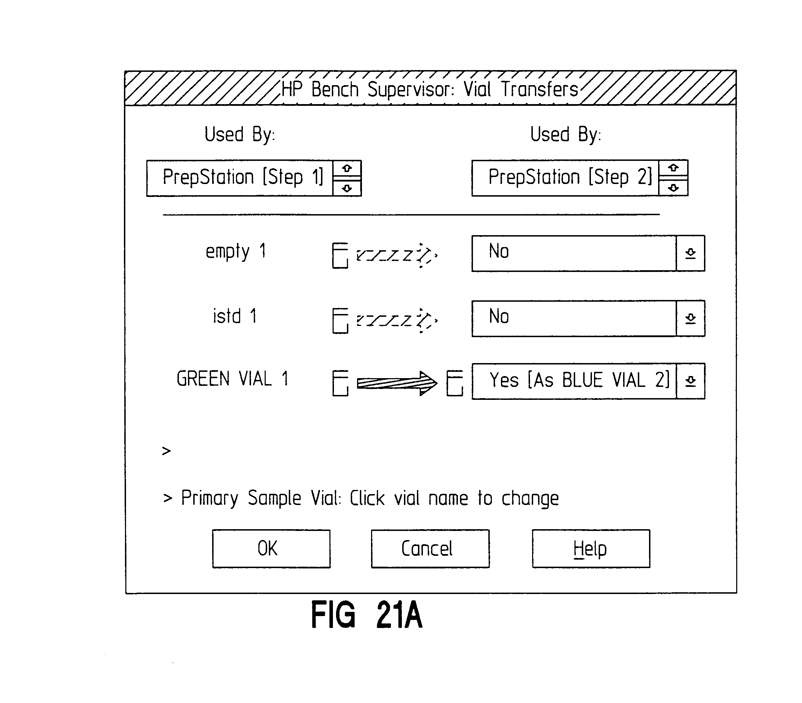

Vial transfers are possible for bench methods that contain two or more instrument methods that use sample and resource vials. After creating such a method on the Instrument Steps dialog box, the Vial Transfer dialog box is automatically displayed. See Figure 21A. The Vial Transfers dialog box facilitates equating vials from earlier steps in a bench method to vials used in later steps. Bench Supervisor then considers them the same vials.

### Assigning vial Transfers

1. If the Vial Transfers screen is not displayed, click the Bench Method from the Bench Method menu, click Edit and then click Vial Transfers. The two Used By boxes at the top of the dialog box (Fig. 21A) can each display any one of the steps in the bench method that use sample and/or resource vials. Each vial identified on the left side of the dialog box can be equated with a vial used in a later step, the latter vial being identified on the right side. This is called a vial transfer.

2. Click the down scroll arrow on the left Used By box until the first step that contains a vial to be used in a later step is displayed.

3. Click the down scroll arrow on the right Used By Box until the step to which the vial will be transferred is displayed.

4. Click on the down arrow across from the vial on the left to be transferred. Scroll through the list of vials used in the step and click on the vial name to which the transfer will take place.

5. Repeat steps 2-4 for any other vials to be transferred.

**Designating a Primary sample vial**

The Vial Transfers screen may also be used to designate one of the vials displayed on the left side of the dialog box as a primary sample vial. The primary sample vial is the vial from the bench method that will be analyzed. It can be from any step in the bench method. Vials that are associated through a transfer are considered the same vial. For example, if the user transferred Vial A from the first step in the bench method to Vial B in the last step, the user could designate either Vial A or Vial B as primary since the Bench Supervisor system recognizes them both as the same vial.

**Entering Vial Information**

The Vials menu option is listed under Advanced Edit in the Edit menu on the Bench Method screen. The Advanced Edit features are in most cases not required to run the bench method but provide an extra degree of control over the inputs and outputs. The Vials dialog box allows the designation of a source and destination for each vial in the method.

Source defines a vial's type or equates it with a vial in another step. Source types may be either a sample, a resource, a vial from a different step, or a tray position number.

The Destination for each vial determines what happens to the vial after it is used in that step. Possible destinations are the vial's original tray position, an empty tray position, Prep Station waste, or a vial used in another step.

To enter source and destination information for the vials in a bench method:

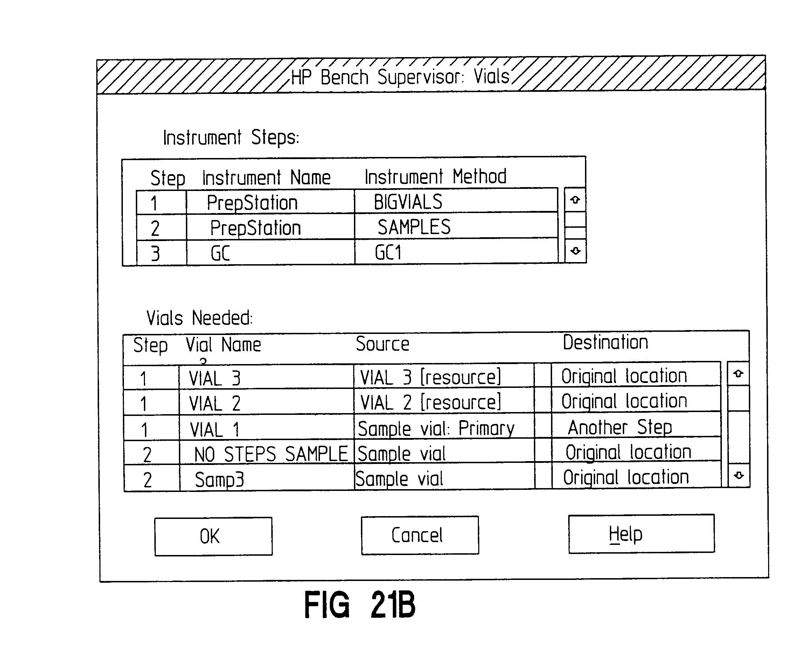

1. Click the Bench Method button on the main screen to open the Bench Method menu. See Figure 21B.

2. Click Edit and then click Vials.

3. To change a source type for a vial, click on the Source Type cell for the vial and then click the down arrow to display a list of source types. Click the appropriate source type.

**ENTERING DATA INFORMATION**

The data information required for a bench method is dependent on the instruments running under the Bench Supervisor system. Data inputs include such things as data files, calibration lines, data directories, operator information, and sample information.

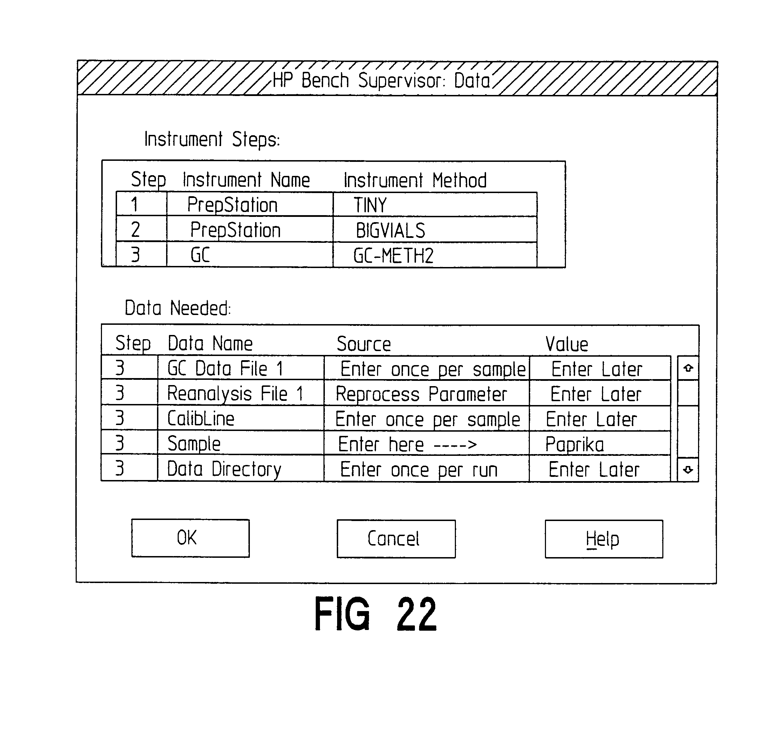

1. Click the Bench Method button on the main screen to open the Bench Method menu. See Figure 22.

2. Click Edit and then click Data.

3. To change a source type for a vial, click on the Source Type cell for the vial and then click the down arrow to display a list of source types. Either the actual data value (file name, etc.) or one of the three other source types below can then be selected:

**Enter here** - Use this source type to enter the information now. A dialog box is opened to enter the information.

**Enter once per run** - Use this source type to enter the information once for the entire bench method. The information is entered in the Run Info dialog box that is displayed after the run is started.

**Enter once per sample** - Use this source type to batch process a number of different samples and want to enter different data for each sample. This source type forces the information to be entered each time the instrument method is run in the bench method.

**LOADING AN EXISTING BENCH METHOD**

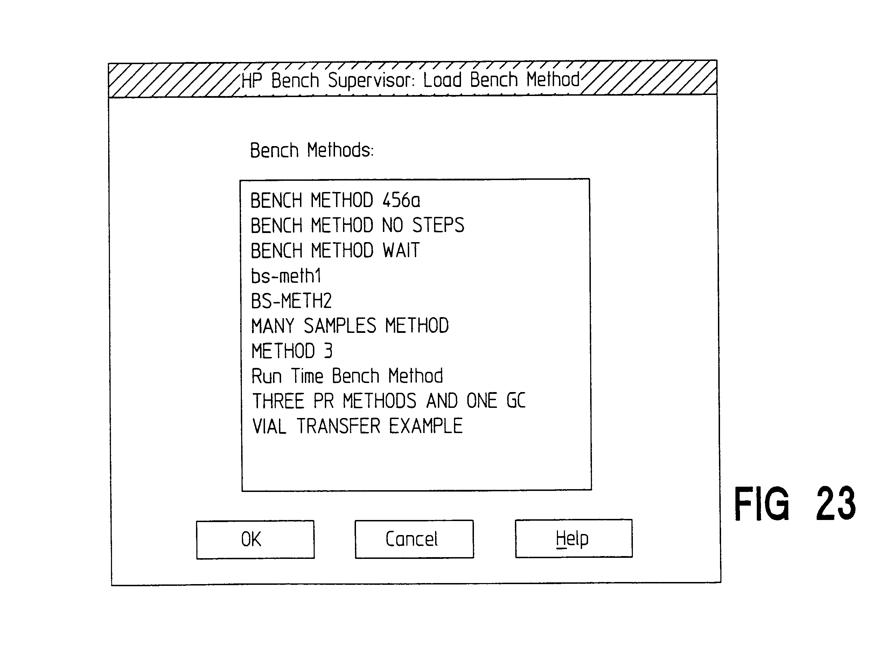

Before editing a bench method or performing a single run on a particular method, first load the method. Bench methods that have been loaded are displayed in the Bench Method Status screen. See Figure 23.

1. Click on the Bench Method menu button.

2. Click File and then click Load. A list of the existing bench methods in the current database is displayed.

3. Click on the bench method to be loaded and then click OK.

The selected bench method is loaded and is displayed in the Bench Method Status screen.

## SAVING A BENCH METHOD

Bench methods are not saved as individual files but are saved as records in the current data base. Each change made to a method is automatically saved in the data base.

## RUNNING A SINGLE BENCH METHOD

The Bench Supervisor system will prompt the user with the appropriate dialog boxes if all of the required vial and data information have not yet been entered.

1. Load the method to be run.
2. Click the Runs button to open the Runs menu.
3. Click Run Bench Method and then click Start.
4. If the status bar on the Bench Method Status box reads "Missing Vial or Data Inputs" or if the Start Run Prompts option is turned on, the Bench Method Run Information and/or the Setup Tray dialog boxes will be displayed depending on the instrument methods in the bench method. Complete them as described below.

### Bench Method run information

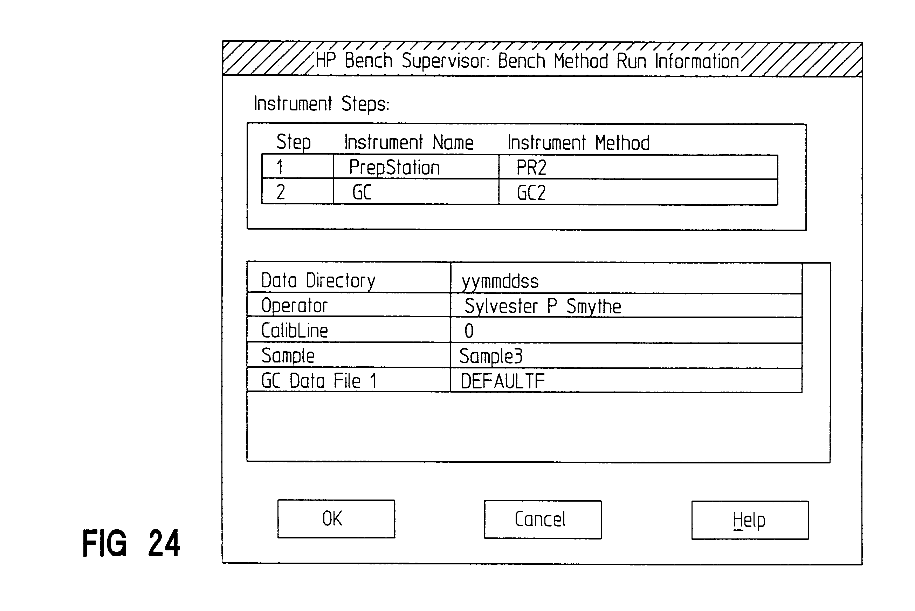

Analysis instrument applications often require information to be entered before each run; this information may include the name of the operator or the sample. The Run Information dialog box depicted in Figure 24 allows the entry of such information in Bench Supervisor rather than in the instrument software. If Run Information is required for the bench method, the Bench Method Run Information screen will appear after selecting Start. The required information will vary with the instrument applications.

### Setup Tray

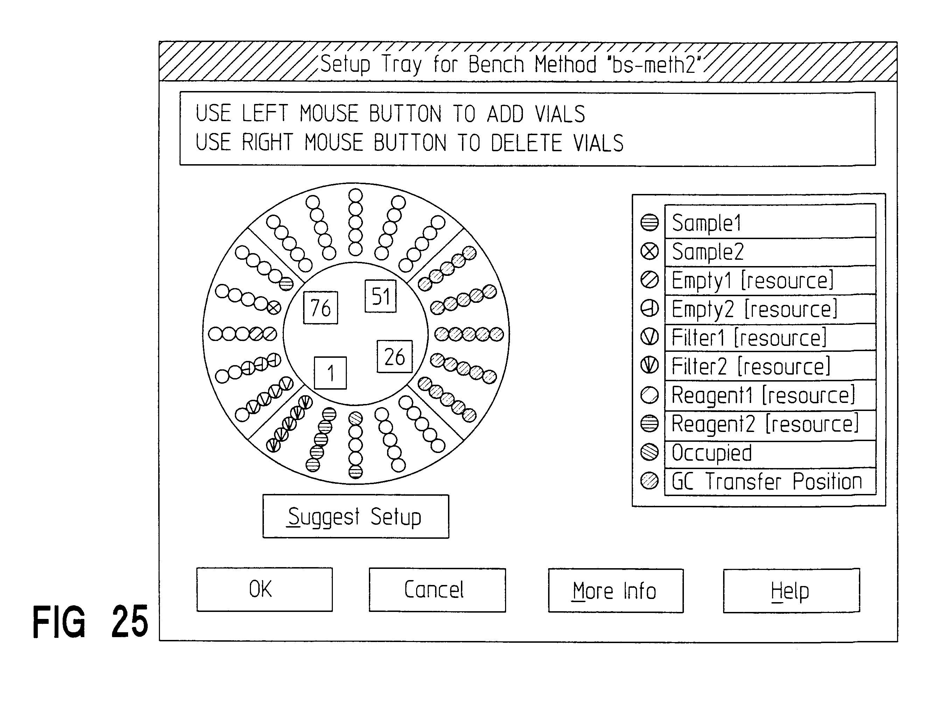

Figure 25 depicts a Setup Tray dialog box. If the bench method contains an instrument method that uses numerous vials (such as a Hewlett Packard HP7686 Prep Station method), the Setup Tray dialog box will be displayed after the user select Start. On this screen, the vials used in the bench method are assigned to positions on the automated tray. There are 100 positions on the tray arranged in four quadrants. Each quadrant has 25 positions arranged in 5 "spokes" of 5 positions each. The position under the box labeled "1", is position #1. Working outward the rest of the positions on the spoke are numbers 2-5. Moving counter-clockwise, the next spoke starts at position #6 on the inside and runs to #10 on the outermost position. The numbers for the other vial positions continue in this manner.

**Transfer positions** - Depending on the instrument attached to the tray, certain vial positions are reserved for use by the instrument. Vials cannot be placed in these positions.

**Assigning vial positions on the tray** - After loading the tray with all of the necessary vials for the bench method, enter their positions on the Setup Tray dialog box.

### Aborting a bench method during a run

To stop a method while it is running, click the Bench Method button to open the Bench Method menu. Click Run Bench Method and then click Abort. The bench method will stop running after the current instrument command has been completed and all equipment has reached a safe state. The Bench Method Status screen will display an "Aborting" message until the method has stopped completely. Then the message will change to "Aborted."

A calibration method is a bench method that is run to check the calibration of the equipment. One or more calibration methods may be linked to a bench method. Calibration methods will run automatically before the bench method is run and after the bench method has run a prescribed number of times in a sequence.

Calibration methods are identical to standard bench methods except that sample vial(s) for calibration methods must be in fixed positions on the tray.

To process multiple samples, bench methods can be linked together to create a bench sequence. For each bench sequence, the user must specify: the order in which the bench methods are to run; the vial positions that the sample and resource vials from each bench method will use; the number of times each bench method in the sequence is to be run; and general information such as the name of the person running the sequence.

### Creating a new bench sequence

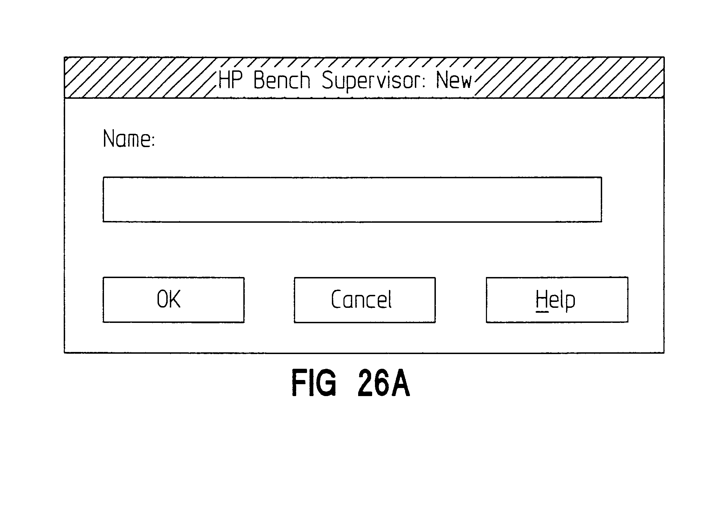

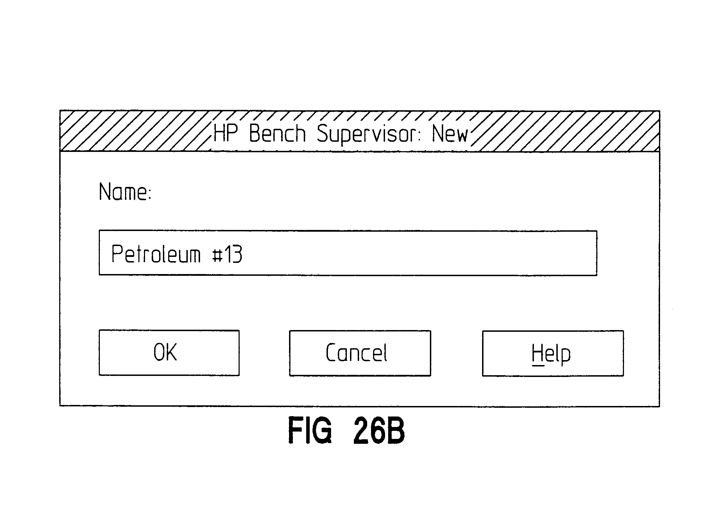

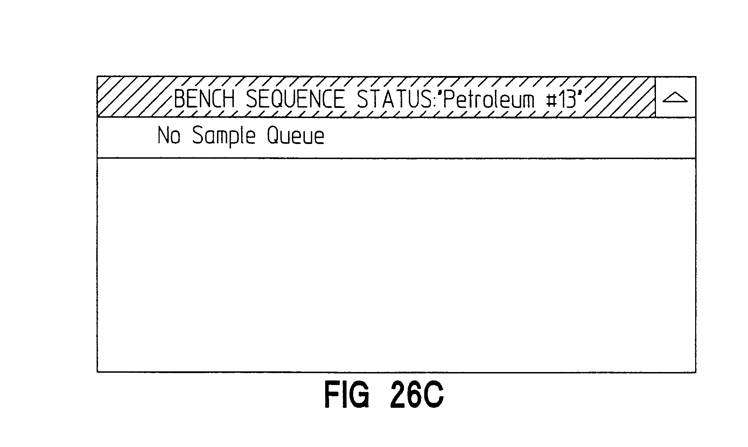

Follow the procedure below to create a new, blank bench sequence in the current database.
1. Click the runs button to open the Runs menu.
2. Click Edit Bench Sequence on the menu bar and then click New. See Figure 26A.
3. Type a name for the bench sequence. See Figure 26B. Click OK. The new, blank bench sequence is loaded, and the Bench Sequence Status bar reads "No Sample Queue". See Figure 26C.
4. Follow the procedure in Assigning bench methods to a sequence to continue creating the sequence.

### Assigning bench methods to a sequence

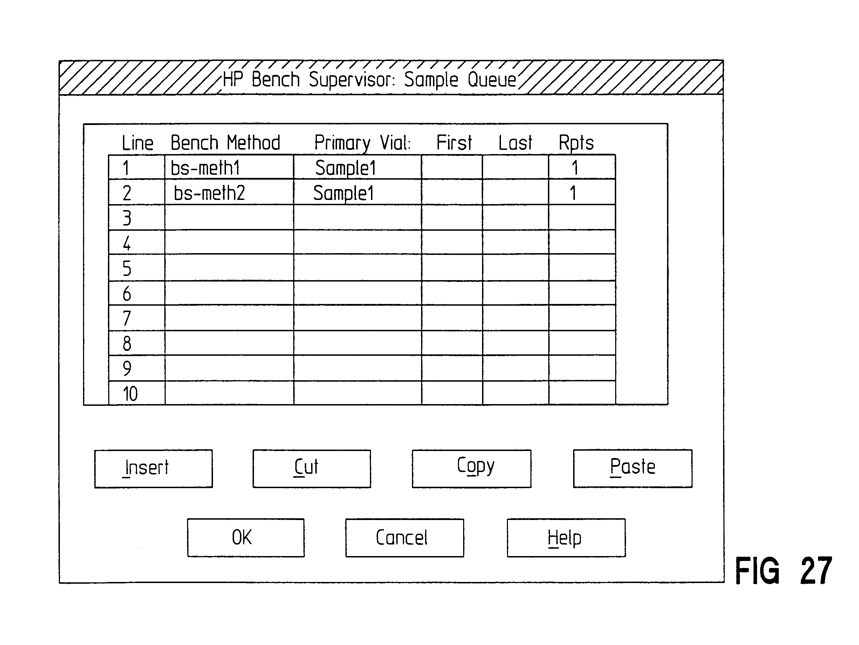

Figure 27 depicts a Sample Queue dialog box. Use the Sample Queue dialog box to assign bench methods to the sequence and set how many times each bench method will run. A sequence must be created before following this procedure.
1. Click the Runs button on the main menu to open the Runs menu.
2. Click Edit Bench Sequence and then click Sample Queue.
3. The first box under Bench method is highlighted. Click on the down arrow to open up a list of all of the existing bench methods in this data base. Click on the desired method. The primary sample vial for this bench method (if any) is entered in the Primary Vial box (cell?). If there is no primary vial for the method (none(none) is entered. The Primary Vial information may only be changed at the bench method level.
4. If the bench method has a primary sample vial, enter its vial position(s) in the First and Last columns. To run the bench method once in the sequence, enter the same vial position number (1-100) in both the First and Last columns and leave the Rpts (repeats) column at the default value of 1. Click OK to close the dialog box.

### Method repetition in a sequence

The following kinds of repetition are possible using bench sequences: running a bench method multiple times on the same sample; running a bench method multiple times using a different sample vial for each run; and running a bench method multiple times on multiple samples.
1. First follow the assigning bench methods to a sequence procedure outlined above.
2. To run the bench method on multiple samples, specify a consecutive range of vials in the First and Last columns:
    a. In the First column, enter the vial position the first sample vial will occupy in the tray.
    b. in the Last column, enter the vial position the last sample vial will occupy in the tray.
    c. When the operator runs the bench sequence, he or she should make sure the samples for the method are placed in the range of specified. For example, to run a bench method on five different samples, the operator could specify a First value of 3 and a Last value of 7. Then place the five samples in vial positions 3, 4, 5, 6, and 7.
3. To run the bench method more than once on the same sample, enter the same vial position number in the First and Last columns and then enter 2 or greater in the Rpts (repeats) column. The number entered in the Rpts column specifies how many times the bench method will run on each sample specified.
4. To run a bench methods multiple times on multiple samples, enter a range of vials in the First and Last columns and enter a number greater than 1 in the Rpts column. For example, to run a bench method twice on each of the vials in positions 3, 4, and 5 on the tray, the First, Last, and Rpts column would appear as follows:

| First | Last | Rpts |
|-------|------|------|
| 3 | 5 | 2 |

### Entering line information

Bench sequences are composed of lines in the same way that bench methods are composed of steps. Each line in a bench sequence refers to one run of a bench method on one sample vial. Because multiple runs can be specified for each bench method using different sample vials, there will often be more lines in the sequence than bench methods.

Line information identifies the input data needed for each line in the sequence. Input information is dependent on the individual instrument applications and can include: where each vial is on the tray; which data files are needed by instrument methods; and what calibration line is used for a GC instrument method.

To enter Line Information:

1. Click the Runs menu button on the main screen to open the Runs menu.

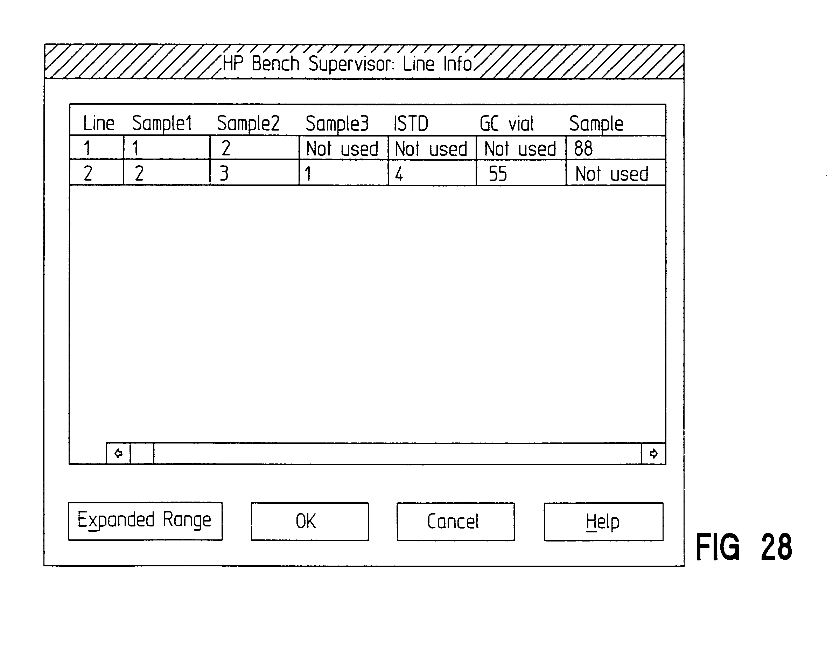

2. Click Edit Bench Sequence and then click Line Info. See Figure 28. The type of input data are listed along the top row. These will include each vial and data file used in the method, the name of the sample, etc. The tray positions for the Primary Sample vial are already entered from the Sample Queue dialog box.

3. Enter a position number for each vial. Vials on the same line cannot share position numbers.

4. Enter any other information such as the sample name, data files, calibration lines, etc.

**Fill Column**

The Fill Column button can be used to automatically assign different tray positions to vials with same name that are used in different lines of a sequence. After assigning a vial position to at least one occurrence of the vial, click the Fill Column button. The remaining occurrences of the vial in steps below the last assigned vial are automatically completed with the next available vial position numbers.

**Entering Vial Info**

Use the Vial Info dialog box to use the same sample vials, calibration lines, GC data files, etc., each time a particular primary sample vial is used. Primary sample vials are designated at the bench method level.

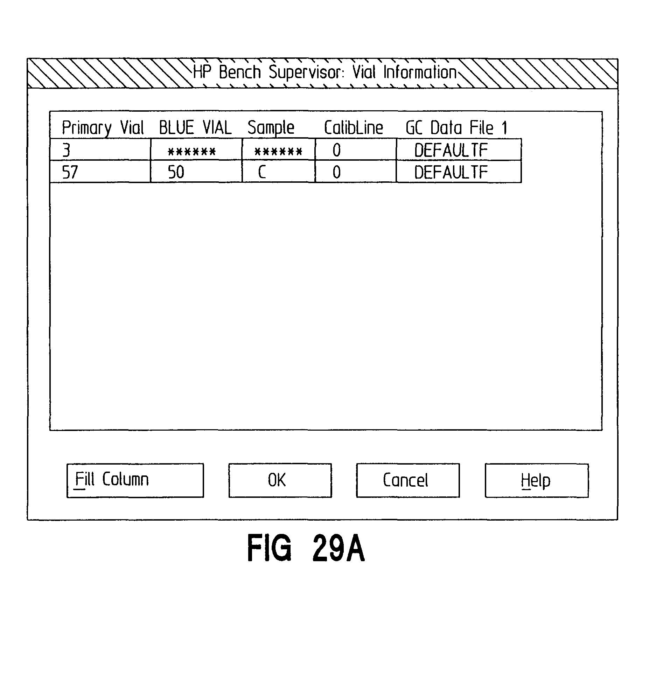

Figure 29A depicts a Vial Info dialog box. The Vial Info dialog box displays a different row of cells for each different tray position that the primary sample vial occupies. The first column in each row contains the tray positions for each primary sample vial used in the sequence. These values may not be changed in this dialog box. The remaining columns list additional sample vials used in the sequence and data files and calibration lines used to process the primary vial. Changing one of these vials will change it in each line of the sequence that uses the same primary sample.

For example, in Figure 29A, two rows of cells are displayed. One row is for the lines in the sequence that use the primary sample vial in position 3, and one row is for the lines in the sequence that use the primary sample vial in position 57.

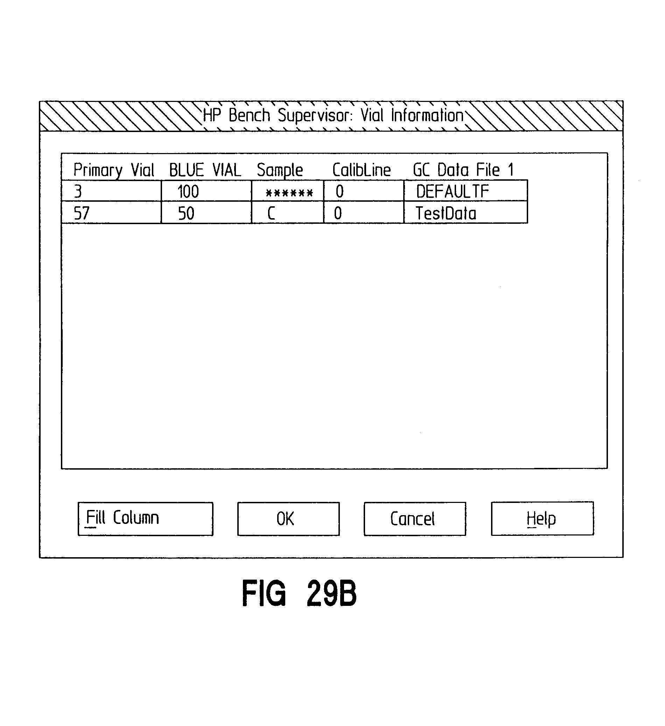

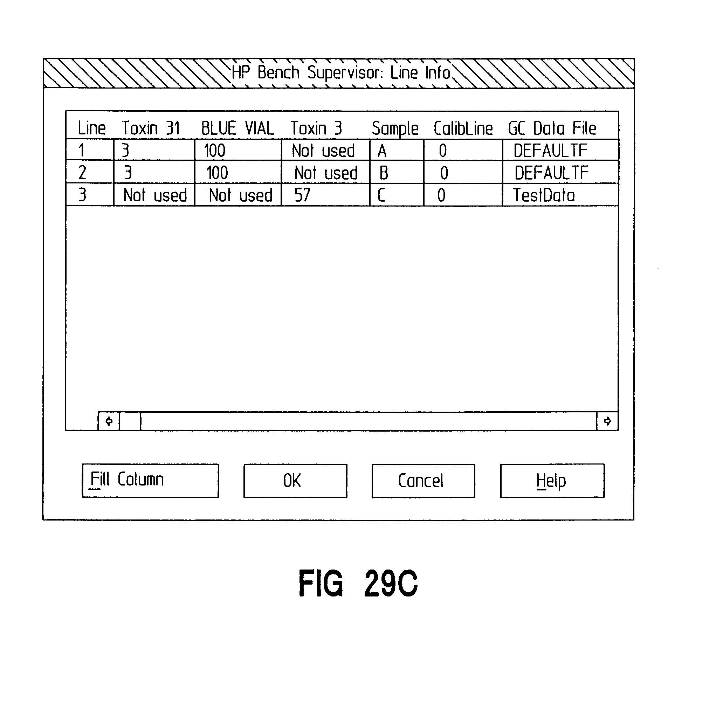

If, as shown in Figure 29B, the operator changes the value for Blue Vial in the row that has the primary vial in position 3 and also changes the value for GC Data File 1 in the row that has the primary vial in position 57, the corresponding entries will be changed in the Line Info dialog box (shown in Figure 29C).

**Vial Info vs. Line Info**

The Vial Info and Line Info dialog boxes contain duplicate information but are used for different purposes.

The Line Info dialog box is used to specify each vial position, calibration line, and data file name as it occurs for each line (bench method) in the sequence. For example, if Blue Vial is used in lines 1 and 3 of the sequence, one can discriminate between them by entering a different tray position for each occurrence or consider them identical by entering the same tray position. Or, if the operator wants two or more vials that have different names and occur on different lines to be considered the same, he or she can enter the same tray positions for each.

The Vial Info dialog box displays the same information as the Line Info dialog box but instead of changing each individual occurrence of a vial position or a data file, the operator changes all occurrences that use the same primary sample vial.

Each primary sample with a distinct vial position on the Line Info screen has a row in the Vial Info dialog box. Changing a secondary vial position or data file name in one of these rows changes it on each line of the sequence that uses the same primary sample.

**Loading a sequence**

Before the operator can edit or run a sequence, he or she must load the sequence to make it the current sequence.

1. Click the Runs menu button on the main screen to open the Runs menu.

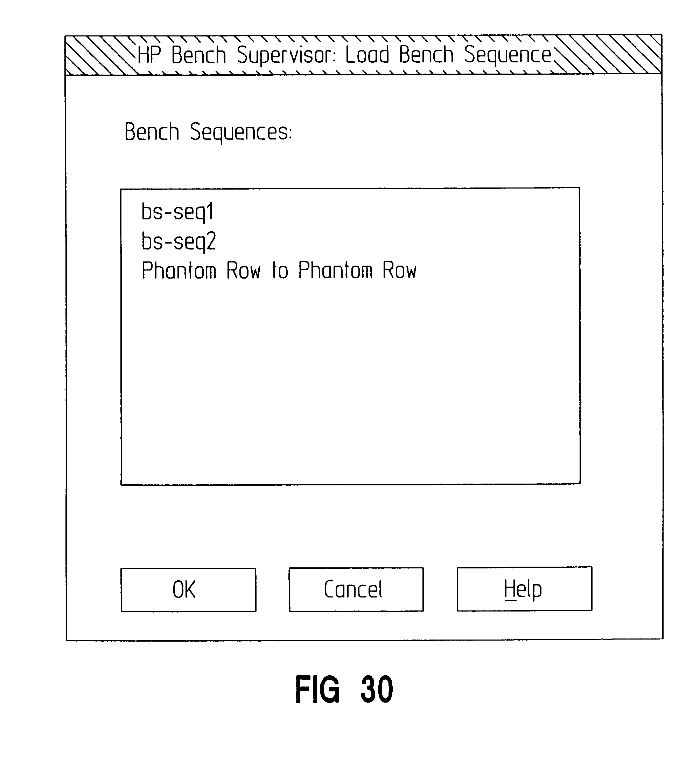

2. Click Edit Bench Sequence and then click Load. See Figure 30.

3. A list of the existing bench sequences in the current data base is displayed. Click on the desired sequence and then click OK.

The selected sequence is loaded as the current sequence.

**Running a Sequence**

1. Load the sequence to be run.

2. Click the Runs menu button on the main screen to open up the Runs menu.

3. If the Bench Sequences Status window reads "Missing Vial or Data Inputs", the vial positions or data file names still need to be entered.

4. Click Run Bench Sequence and then click Setup Tray.

**Pausing a Bench Sequence During a Run**

To pause a sequence while it is running:

1. Click the Runs button on the main screen to open up the Runs menu.

2. Click Run Bench Sequence on the menu bar and then click Pause. The sequence will stop after the current command has been processed.

To restart the bench sequence where it left off:

1. Click the Runs menu button,

2. Click Run Bench Sequence on the menu bar,

3. Click Continue.

**Aborting a Bench Sequence During a Run**

To stop a sequence while it is running, click the Runs button to open the Runs menu. Click Run Bench Sequence and then click Abort. The bench sequence will stop running after the current instrument command has been completed and all equipment has reached a safe state. The Bench Sequence Status screen will display an "Aborting" message until the sequence has stopped completely. The message will then change to "Aborted".

**Reprocessing a Bench Sequence**

The Reprocess command allows the operator to reprocess the data generated from the last bench sequence run and print reports using this data. Reprocessing allows the operator to manipulate the analysis data in different ways to obtain optimum results. The operator can also use the reprocess command to print out reports from data files saved to disk.

The sequence to be reprocessed must meet the following qualifications: it ran successfully; it has not been modified since it was run, none of the bench methods it specifies have been modified since it was run, and none of the instrument methods included in the bench methods specified by the sequence have been modified in a way which changes their inputs or outputs since the sequence was run.

To reprocess a bench sequence:

1. Make any desired changes to the data analysis parameters for the analysis instrument method.

2. Click the Runs button on the main screen to open up the Runs menu.

3. Click Run Bench Sequence on the menu bar and then click Reprocess. The bench sequence will run again using the same parameters as the original run.

**Separate Data Bases**

Bench Supervisor saves all of the bench methods and sequences in a database file rather than in separate DOS files. This allows the operator to have several different sets of bench sequences and methods without having to maintain separate directories.

Each person in the lab that maintains a separate set of bench methods and sequences can easily switch to his or her own database without restarting the Bench Supervisor software. The name of the current data base is displayed on the title bar of the main Bench Supervisor system screen and on the title bar of the Load Bench Method and Load Bench Sequence screens.

**Creating a New, Empty Data Base**

Follow the procedure below to create a data base for a new set of bench methods and bench sequences. The data base will contain no bench methods or sequences.

1. Click the Utilities menu button to open the utilities menu.

2. Click Database and then click Change. See Figure 31A.

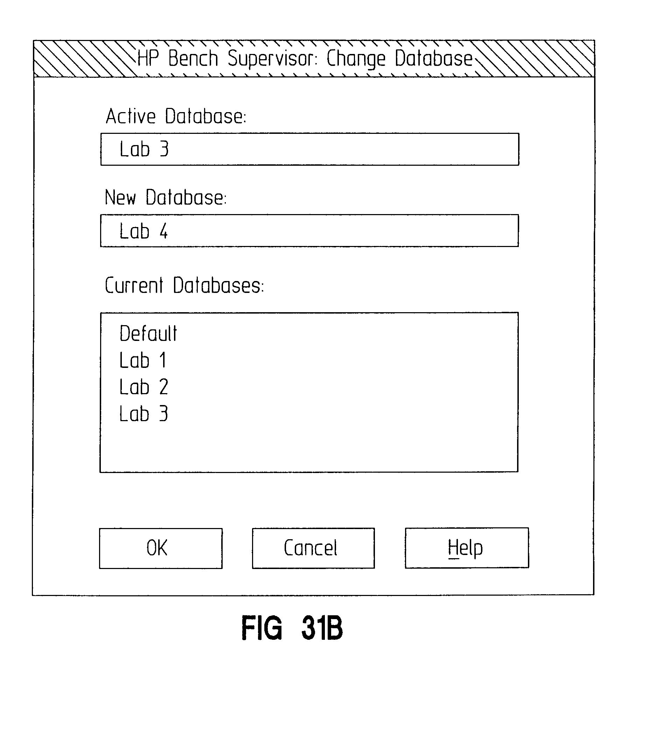

3. Type a name for the new data base that does not match any of the database names in the Current Databases box. See Figure 31B. Click OK.

4. Click Yes at the confirmation prompt to create the new database. The new database contains no existing bench methods or bench sequences.

**Appendix: Bench Supervisor System - Instrument Interface**

The instrument interface defines the standard way the Bench Supervisor system communicates with instruments.

The interface is designed so that a Bench Supervisor interface can be added to existing instrument applications which support the standard Hewlett Packard Analytical Group CP language without modifying the application.

**I. Information Requests**

The Bench Supervisor makes the following requests of an instrument application for specific types of information.

**A. Get Application Information**

The Bench Supervisor uses this request to exchange version information with the instrument application and get information about the instrument(s) supported by the application when the application is first started up.

The request includes the version number of the Bench Supervisor system. This allows an instrument to adapt its behavior to a particular version of the Bench Supervisor system.

The version number is divided into a major version number which will only change if there is a change in the virtual instrument interface which makes it incompatible with previous versions and a minor version number which will change when the Bench Supervisor system adds functionality which an instrument may want to take advantage of.

The instrument should send the following items to the bench supervisor before returning from the get application information command:

1. Instrument Version

Tells the Bench Supervisor system what version of the Bench Supervisor protocol the instrument was designed to support. This will probably be the current version number of the Bench Supervisor protocol available at the time the instrument software was released. This may be required to let the Bench Supervisor system be backward compatible with old versions of instruments.

2. Instrument capabilities

Tells the Bench Supervisor system the name and capabilities of the instruments which the application supports. Normally applications support one instrument per instance of the application. In this case only a single instrument capability list is returned to the Bench Supervisor system. Applications which support multiple instruments would return an instrument name and capability list for each supported instrument.

The capabilities are used to determine what operations the instrument supports. The possible capabilities are:

(1) ABORT - supports abort command during an instrument step;

(2) ACQUIRE -instrument can be Acquired and Released;

(3) METHODS - the instrument supports the List Available Methods request;

(4) PAUSE - instrument can pause during an instrument step

(5) RESOURCE_ENTRY - instrument provides a service (dialog) to enter resource instances.

24

(6) STEP__STATUS - specifies an alternate name for the instruments steps status;

(7) TIMESTAMP - instrument can return the date and time an instrument method was last prepared;

(8) TRANSPORT - instrument can perform general transport functions.

3. Required Resources

The instrument can use this request to inform the bench supervisor what the names of the required resource types are. Any resource type which does not exist in the data base will be created. Instances of the resource type are not created. Required resource information also includes location type for instances of the resource, amount of the resource contained in a resource instance for consumable resources and the minimum amount which must be left before a consumable resource instance is not used any more.

**B. List Available Methods**

This request lets the Bench Supervisor system request a list of valid methods from an instrument for a specific class. The list is used by the Bench Supervisor system to give the user a menu of available methods to be run as part of a Bench Method. For instruments which organize methods in hierarchical groupings (subdirectories), the current group is included in the request and alternate groups can be returned in the response.

**C. Get Method Information**

The request specifies a method name and the type of information requested.

The instrument should respond with the following response depending on which type was requested.

1. Method Data/Time stamp

The method time stamp is the time the method was last modified. This may be the time kept in the DOS file directory for a method file. It is used to determine if the Bench Supervisor system needs to verify that the Input/Output list for the instrument method has not changed since the bench method was setup. If the input/output list has changed the Bench Method cannot run.

2. Resource Requirements

The resource requirements request provides a way for the Bench Supervisor system to ask instruments for an estimate of system resources which the running of a specific instrument method will use. The Bench Supervisor can then calculate the total system resources which will be used by a sequence to determine if sufficient resources exit for completion of the sequence.

3. Run time

The run time is an estimate the instrument provides for time to perform an instrument step using the specified method. A range of times can be provided. The run time is optional.

4. Input/Output Parameter Information

The Input/Output Parameter Information requests several types of information which the Bench Supervisor system needs to prepare a bench method. The application should set the following topic/item values before it returns from the command.

a) Method Mode

The method mode indicates how the instrument step is scheduled. The possible modes are normal, batch, and pipeline.

b) Implicit Method Steps

The method steps indicate additional implicit instrument steps which should be automatically added to the bench method.

c) Input/Output List

The input/output parameter information defines the type of inputs and outputs a particular instrument method requires. The Bench Supervisor uses the information for setting up a bench method.

D. Allowed Transport

The Bench Supervisor uses the Allowed Transport command to determine if a device which has indicated that it can perform general transports can perform a specific transport.

## II. Action Requests

Action requests are commands from the Bench Supervisor system to an instrument application to perform some action.

### A. Acquire/Release Instrument

The acquire/release instrument command is intended to tell the instrument that its instrument control functions should be reserved for control by the Bench Supervisor system or they can be released for use by the user. During a Bench Supervisor controlled sequence the user should be prevented from accidentally using the instrument control portions of the instrument interface. Since the Bench Supervisor system requests single method runs of the instrument between runs the user interface would normally default back to being ready to accept user commands. An explicit override of the acquire may be desirable for instruments which may encounter unexpected error conditions for which the user needs to regain control.

### B. Reset

The reset command is sent once before the beginning of a sequence. It allows the application to perform any initialization operations required before running one or more methods.

### C. Load Method

The load method command requests the instrument application to prepare the instrument to begin an instrument step.

### D. Start Instrument Step

The start instrument step command requests the instrument application to start an instrument step.

### E. Abort Instrument Step

Aborts an instrument step which is currently running. It is up to the instrument application to make sure that the abort occurs at a safe point for the hardware.

### F. Pause Instrument Step

Pauses an instrument step which is currently in progress. It is the instruments responsibility to make sure that the paused step can be restarted without compromise to the purpose of the instrument step.

### G. Continue Instrument Step

Resumes a paused instrument step.

H. Close Application

Command to the application to shut down. It is the instrument applications responsibility to perform any instrument hardware operations which need to be performed be fore shutdown and save any dynamic data in the instrument application.

**III. Status Information**

The status information requests inform the Bench Supervisor system of state changes in instruments and signal the instrument of state changes in the Bench Supervisor system.

**A. Input/Output parameter status**

Commands in this section pass status information to and from the instrument during an instrument step.

1. Input status change

The input status change information passes the state of input parameters between the instrument and the Bench Supervisor system. The possible input status values are: Disabled, Enabled, Ready, Presented, Delivered, Accepted, Cancelled, Aborted, and Failed.

2. Output status change

The output status change information passes the state of output parameters between the instrument and the Bench Supervisor system.The possible output status values are: NotReady, Enabled, Ready, Present, Presented, Delivered, Accepted, Cancelled, Aborted, and Failed.

**B. Instrument status**

The instrument status gives the current status of the instance of the application. For applications which support multiple instruments via a single instance of the application the status applies to all of an instance's instruments. For applications which support a single instrument per instance the status is of both the instance and the instrument. The possible instrument status values are: Ready, Busy, Starting, Running, Down, Halted, and Paused.

**C. Step Status**

The Step Status gives the status of the current instrument step if a step is currently active or of the last instrument step if the instrument is between steps. The step status is needed in addition to the instrument status to make sure that the status is not lost before the Bench Supervisor system receives it. The step status is also specific to a particular instrument for applications which support multiple instruments per instance. The instrument may change overall status several times for example going from RUNNING to READY to ERROR. The ERROR condition may not have anything to do with the complete instrument step. Once the instrument step completes the step status will not change again until the Bench Supervisor system sends another command. The possible step status values are: Ready, Scheduled, Loading, Loaded, Starting, Running, Pausing, Aborting, Cancelled, Completed, Paused, Aborted, and Failed.

D. Acquire status

The acquire status tells the Bench Supervisor system whether the instrument is in the acquired state or released state. Since the user may have the ability to force the instrument out of the acquired state, the Bench Supervisor system needs to have a way to track the instrument state.

**IV. Data Value Transfers**

The data value transfer requests are the means by which the values of data and dynamic locations are passed between the Bench Supervisor system and instrument applications. Data can be transferred in ASCII or binary format.

**A. Get Output Value**

The Get Output Value request is the way for the Bench Supervisor system to transfer data values and dynamic location outputs from the instrument to the Bench Supervisor system.

**B. Send Input Value**

The Send Input Value request is the way for the Bench Supervisor system to transfer data values and dynamic location inputs to the instrument from the Bench Supervisor system.

**V. User Interface Requests**

Requests of this type are for the instrument to provide a dialog for requesting some type of user interaction.

**A. Resource Instance Entry**

The resource instance entry request is only sent to instrument which indicated they have the RESOURCE_ENTRY capability.

**VI. Error Handling**

**A. Return Message**

The return message is used to display messages to the user about the status of the application. Messages displayed this way will not hold up the application. Only one message is displayed until the user OKs it, then the next will be displayed.

**Claims**

1. A bench supervisor system (10) for coordinating the operations of a number of instruments in performing a bench method on a sample to be analyzed or a bench sequence on a set of bench methods and samples to be analyzed, comprising:
   (a) configuration means (10-5) for ascertaining capabilities of selected instruments;
   (b) bench method command means (10-3) for ascertaining and selecting the instrument methods to be performed by said selected instruments, and for ascertaining input/output lists and implicit steps associated with the selected instrument methods;
   (c) sequence command means (10-4) comprising means for preparing for a bench sequence, including ascertaining a name for the bench sequence, and for identifying a bench method(s) associated with the bench sequence;
   (d) sequence scheduler means (10-6) for scheduling instrument methods for each instrument required by the bench sequence;
   (e) data base management means (10-9) for managing bench methods, sequences and result information generated by running sequences; and
   (f) communications means (10-8) for communicating with instrument applications.

2. The bench supervisor system recited in claim 1, wherein said sequence command means further comprises means for:
   (1) ascertaining a vial range associated with the bench sequence, collecting bench method inputs resolved to sequence and per sample, and ascertaining from a user additional required inputs;
   (2) starting the bench sequence, including acquiring instruments required for the bench sequence, allowing the user to verify all inputs are correctly set before the sequence is run, and scheduling the sequence;
   (3) pausing and rescheduling a sequence in progress; and
   (4) aborting a sequence.

3. The bench supervisor system recited in claim 1, wherein said sequence scheduler means comprises means for:

(1) selecting instrument methods for each instrument;

(2) waiting for required inputs to be ready and required outputs to be enabled;

(3) requesting each instrument to load a corresponding instrument method;

(4) initializing input and output state machines associated with each instrument;

(5) requesting each instrument to start performing its corresponding instrument method;

(6) effecting input and output state transitions as each instrument indicates a state change; and

(7) releasing an instrument when the instrument indicates that its method has completed.

4. The bench supervisor system recited in claim 1, wherein said data base management means comprises means for:

(1) creating new bench methods, creating new versions of existing bench methods, copying existing bench methods, providing a list of existing bench methods, providing a list of inputs, outputs and implicit steps for existing bench methods, resolving instrument method inputs and outputs, and providing a list of resources used by existing bench methods;

(2) managing bench sequences, including creating new bench sequences, creating new versions of existing bench sequences, copying existing bench sequences, providing a list of existing bench sequences, entering bench methods for a bench sequence, building a list of inputs resolved to a sequence and per sample for a sequence, providing a list of bench methods for a sequence, providing a list of inputs resolved to a sequence and per sample for a sequence, and storing input values for bench sequences; and

(3) writing modified bench methods and sequences to disk files.

5. The bench supervisor system recited in claim 1, further comprising:

(g) host services means (10-1) for providing information to a host, said information including information regarding the capabilities of the bench supervisor, bench methods the bench supervisor can schedule, inputs and outputs of a particular bench method, the status of a sample being processed, and data outputs for a particular sample.

6. The bench supervisor system recited in claim 1, wherein said bench method command means further comprises means for performing default resolution and user directed resolution for the instrument steps of the selected instrument methods.

7. The bench supervisor system recited in claim 1, wherein said number of instruments includes at least one preparation instrument and at least one analytical instrument.

8. The bench supervisor system recited in claim 1, wherein:

said sequence command means further comprises means for: (1) ascertaining a vial range associated with the bench sequence, collecting bench method inputs resolved to sequence and per sample, and ascertaining from a user additional required inputs; (2) starting the bench sequence, including acquiring instruments required for the bench sequence, allowing the user to verify all inputs are correctly set before the sequence is run, and scheduling the sequence; (3) pausing and rescheduling a sequence in progress; and (4) aborting a sequence;

said sequence scheduler means comprises means for: (1) selecting instrument methods for each instrument; (2) waiting for required inputs to be ready and required outputs to be enabled; (3) requesting each instrument to load a corresponding instrument method; (4) initializing input and output state machines associated with each instrument; (5) requesting each instrument to start performing its corresponding instrument method; (6) effecting input and output state transitions as each instrument indicates a state change; and (7) releasing an instrument when the instrument indicates that its method has completed;

said data base management means comprises means for: (1) creating new bench methods, creating new versions of existing bench methods, copying existing bench methods, providing a list of existing bench methods, providing a list of inputs, outputs and implicit steps for existing bench methods, resolving instrument method inputs and outputs, and providing a list of resources used by existing bench methods; (2) managing bench sequences, including creating new bench sequences, creating new versions of existing bench sequences, copying existing bench sequences, providing a list of existing bench sequences, entering bench methods for a bench sequence, building a list of inputs resolved to a sequence and per sample for a sequence, providing a list of bench methods for a sequence, providing a list of inputs resolved to a sequence and per sample for a sequence, and storing

29

input values for bench sequences; and (3) writing modified bench methods and sequences to disk files;

said bench method command means further comprises means for performing default resolution and user directed resolution for the instrument steps of the selected instrument methods; and

said number of instruments includes at least one preparation instrument and at least one analytical instrument; and

further comprising: (g) host services means for providing information to a host, said information including information regarding the capabilities of the bench supervisor, bench methods the bench supervisor can schedule, inputs and outputs of a particular bench method, the status of a sample being processed, and data outputs for a particular sample.

**FIG 1**

EP 0 596 205 A2

BENCH SUPERVISOR BLOCK DIAGRAM

FIG 2

32

**FIG 3**

User Enters Bench Method Name ⎯ 40

New Bench Method Created in Data Base ⎯ 42

User Selects Instrument ⎯ 44

Bench Supervisor Requests Instrument Methods from Instrument ⎯ 46

User Selects Instrument Method ⎯ 48

Bench Supervisor Requests I/O List and Implicit Step List from Instrument ⎯ 50

All Steps Entered? ⎯ 52

No

Yes

Resolve Unambiguous Inputs and Outputs ⎯ 54

All Inputs and Outputs Resolved? ⎯ 56

No → User Specifies Undefined Resolutions ⎯ 58

Yes

User Enters Inputs Resolved to Bench Method ⎯ 60

**FIG 4**

FIG 5

FIG 6

FIG 7

FIG 8

FIG 9

FIG 10

EP 0 596 205 A2

FIG 11

FIG 12

EP 0 596 205 A2

NOT_READY 210

ENABLED 216

READY 220

DELIVERED 222

ACCEPTED 224

FAILED 218

CANCELED 212

ABORTED 214

**FIG 13**

**FIG 14**

EP 0 596 205 A2

FIG 15

EP 0 596 205 A2

FIG 16

FIG 17

| Step | Instr. Name | Instr. Method | Status |
|------|-------------|---------------|--------|
| | | BENCH METHOD STATUS: "bs-meth3" | △ |
| | Idle | | |
| 1 | PrepStation | SAMPLE3 | IDLE |
| 2 | GC | GC1 | IDLE |

# FIG 18

HP Bench Supervisor: New

Name:

| OK | Cancel | Help |

## FIG 19A

///HP Bench Supervisor: New///

Name:

PETROLEUM #456 8/21/92

OK       Cancel       Help

# FIG 19B

////BENCH METHOD STATUS: "PETROLEUM #456 8/21/92"//// △

No Instrument Steps

# FIG 19C

HP Bench Supervisor: Instrument Steps

| Step | Instrument Name | Instrument Method |
|------|-----------------|-------------------|
| 1 | | |
| 2 | | |
| 3 | | |
| 4 | | |
| 5 | | |
| 6 | | |
| 7 | | |
| 8 | | |
| 9 | | |
| 10 | | |

Delete Step    Insert Step

OK    Cancel    Help

# FIG 20A

HP Bench Supervisor: Instrument Steps

| Step | Instrument Name | Instrument Method |
|------|-----------------|-------------------|
| 1 | | |
| 2 | GC | |
| 3 | PrepStation | |
| 4 | | |
| 5 | | |
| 6 | | |
| 7 | | |
| 8 | | |
| 9 | | |
| 10 | | |

Delete Step          Insert Step

OK          Cancel          Help

# FIG 20B

FIG 20C

EP 0 596 205 A2

```
┌─────────────────────────────────────────────────────────────┐
│/////////////// HP Bench Supervisor: Vial Transfers ////////////│
├─────────────────────────────────────────────────────────────┤
│                                                               │
│        Used By:                        Used By:               │
│  ┌──────────────────┬──┐        ┌──────────────────┬──┐       │
│  │ PrepStation [Step 1]│⇧⬇│      │ PrepStation [Step 2]│⇧⬇│    │
│  └──────────────────┴──┘        └──────────────────┴──┘       │
│  ─────────────────────────────────────────────────           │
│                                                               │
│     empty 1      ▯ ⟋⟋⟋⟍⟍       ┌──────────────┬──┐            │
│                               │ No           │⬇│             │
│                               └──────────────┴──┘            │
│                                                               │
│     istd 1       ▯ ⟋⟋⟋⟍⟍       ┌──────────────┬──┐            │
│                               │ No           │⬇│             │
│                               └──────────────┴──┘            │
│                                                               │
│  GREEN VIAL 1    ▯ ═══▷ ▯       ┌──────────────────────┬──┐   │
│                               │ Yes [As BLUE VIAL 2]  │⬇│    │
│                               └──────────────────────┴──┘   │
│                                                               │
│  >                                                            │
│                                                               │
│  > Primary Sample Vial: Click vial name to change             │
│                                                               │
│  ┌──────────┐   ┌──────────┐   ┌──────────┐                  │
│  │   OK     │   │  Cancel  │   │  Help    │                  │
│  └──────────┘   └──────────┘   └──────────┘                  │
└─────────────────────────────────────────────────────────────┘
```

# FIG 21A

EP 0 596 205 A2

**HP Bench Supervisor: Vials**

Instrument Steps:

| Step | Instrument Name | Instrument Method | |
|------|-----------------|-------------------|---|
| 1 | PrepStation | BIGVIALS | ⇧ |
| 2 | PrepStation | SAMPLES | |
| 3 | GC | GC1 | ⇩ |

Vials Needed:

| Step | Vial Name | Source | Destination | |
|------|-----------|--------|-------------|---|
| 1 | VIAL 3 | VIAL 3 [resource] | Original location | ⇧ |
| 1 | VIAL 2 | VIAL 2 [resource] | Original location | |
| 1 | VIAL 1 | Sample vial: Primary | Another Step | |
| 2 | NO STEPS SAMPLE | Sample vial | Original location | |
| 2 | Samp3 | Sample vial | Original location | ⇩ |

| OK | Cancel | Help |
|----|--------|------|

## FIG 21B

Instrument Steps:

| Step | Instrument Name | Instrument Method |
|------|-----------------|-------------------|
| 1 | PrepStation | TINY |
| 2 | PrepStation | BIGVIALS |
| 3 | GC | GC-METH2 |

Data Needed:

| Step | Data Name | Source | Value | |
|------|-----------|--------|-------|---|
| 3 | GC Data File 1 | Enter once per sample | Enter Later | ⇧ |
| 3 | Reanalysis File 1 | Reprocess Parameter | Enter Later | |
| 3 | CalibLine | Enter once per sample | Enter Later | |
| 3 | Sample | Enter here ----> | Paprika | |
| 3 | Data Directory | Enter once per run | Enter Later | ⇩ |

| OK | Cancel | Help |
|----|--------|------|

# FIG 22

Bench Methods:

BENCH METHOD 456a
BENCH METHOD NO STEPS
BENCH METHOD WAIT
bs-meth1
BS-METH2
MANY SAMPLES METHOD
METHOD 3
Run Time Bench Method
THREE PR METHODS AND ONE GC
VIAL TRANSFER EXAMPLE

| OK | Cancel | Help |

**FIG 23**

EP 0 596 205 A2

EP 0 596 205 A2

**FIG 24**

HP Bench Supervisor: Bench Method Run Information

Instrument Steps:

| Step | Instrument Name | Instrument Method |
|------|-----------------|-------------------|
| 1 | PrepStation | PR2 |
| 2 | GC | GC2 |

| Data Directory | yymmddss |
|----------------|----------|
| Operator | Sylvester P Smythe |
| CalibLine | 0 |
| Sample | Sample3 |
| GC Data File 1 | DEFAULTF |

| OK | Cancel | Help |

Setup Tray for Bench Method "bs-meth2"

USE LEFT MOUSE BUTTON TO ADD VIALS
USE RIGHT MOUSE BUTTON TO DELETE VIALS

76   51
1    26

⊖ Sample1
⊗ Sample2
⊘ Empty1 [resource]
⊕ Empty2 [resource]
⊗ Filter1 [resource]
⊗ Filter2 [resource]
○ Reagent1 [resource]
⊖ Reagent2 [resource]
⊗ Occupied
⊘ GC Transfer Position

Suggest Setup

OK        Cancel        More Info        Help

FIG 25

EP 0 596 205 A2

HP Bench Supervisor: New

Name:

OK  Cancel  Help

**FIG 26A**

HP Bench Supervisor: New

Name:

Petroleum #13

OK    Cancel    Help

FIG 26B

BENCH SEQUENCE STATUS:"Petroleum #13"

No Sample Queue

FIG 26C

HP Bench Supervisor: Sample Queue

| Line | Bench Method | Primary Vial: | First | Last | Rpts |
|------|--------------|---------------|-------|------|------|
| 1 | bs-meth1 | Sample1 | | | 1 |
| 2 | bs-meth2 | Sample1 | | | 1 |
| 3 | | | | | |
| 4 | | | | | |
| 5 | | | | | |
| 6 | | | | | |
| 7 | | | | | |
| 8 | | | | | |
| 9 | | | | | |
| 10 | | | | | |

Insert    Cut    Copy    Paste

OK    Cancel    Help

FIG 27

EP 0 596 205 A2

HP Bench Supervisor: Line Info

| Line | Sample1 | Sample2 | Sample3 | ISTD | GC vial | Sample |
|------|---------|---------|----------|----------|----------|----------|
| 1 | 1 | 2 | Not used | Not used | Not used | 88 |
| 2 | 2 | 3 | 1 | 4 | 55 | Not used |

| Expanded Range | OK | Cancel | Help |

FIG 28

HP Bench Supervisor: Vial Information

| Primary Vial | BLUE VIAL | Sample | CalibLine | GC Data File 1 |
|---|---|---|---|---|
| 3 | ****** | ****** | 0 | DEFAULTF |
| 57 | 50 | C | 0 | DEFAULTF |

| Fill Column | OK | Cancel | Help |
|---|---|---|---|

# FIG 29A

| HP Bench Supervisor: Vial Information | | | | |
|---|---|---|---|---|
| Primary Vial | BLUE VIAL | Sample | CalibLine | GC Data File 1 |
| 3 | 100 | ****** | 0 | DEFAULTF |
| 57 | 50 | C | 0 | TestData |

| Fill Column | OK | Cancel | Help |
|---|---|---|---|

## FIG 29B

| Line | Toxin 31 | BLUE VIAL | Toxin 3 | Sample | CalibLine | GC Data File |
|------|----------|-----------|----------|--------|-----------|--------------|
| 1 | 3 | 100 | Not used | A | 0 | DEFAULTF |
| 2 | 3 | 100 | Not used | B | 0 | DEFAULTF |
| 3 | Not used | Not used | 57 | C | 0 | TestData |

HP Bench Supervisor: Line Info

| Fill Column | OK | Cancel | Help |
|-------------|----|--------|------|

# FIG 29C

HP Bench Supervisor: Load Bench Sequence

Bench Sequences:

bs-seq1
bs-seq2
Phantom Row to Phantom Row

| OK | Cancel | Help |

# FIG 30

HP Bench Supervisor: Change Database

Active Database:
 Default

New Database:

Current Databases:

 Default
 scott

| OK | Cancel | Help |

# FIG 31A

HP Bench Supervisor: Change Database

Active Database:

Lab 3

New Database:

Lab 4

Current Databases:

Default
Lab 1
Lab 2
Lab 3

| OK | Cancel | Help |

# FIG 31B